(19) Europäisches Patentamt
European Patent Office
Office européen des brevets

(11) EP 1 784 447 B1

(12) **EUROPEAN PATENT SPECIFICATION**

(45) Date of publication and mention of the grant of the patent:
**28.03.2012 Bulletin 2012/13**

(21) Application number: **05791478.0**

(22) Date of filing: **29.08.2005**

(51) Int Cl.:
***C08K 3/08*** *(2006.01)* *C08L 67/02* *(2006.01)*

(86) International application number:
**PCT/US2005/030551**

(87) International publication number:
**WO 2006/028757 (16.03.2006 Gazette 2006/11)**

(54) **POLYESTER POLYMER AND COPOLYMER COMPOSITIONS CONTAINING METALLIC TUNGSTEN PARTICLES**

POLYESTERPOLYMER UND COPOLYMERZUSAMMENSETZUNGEN MIT METALLISCHEN WOLFRAMPARTIKELN

COMPOSITIONS DE POLYMERES ET COPOLYMERES DE POLYESTER, CONTENANT DES PARTICULES METALLIQUES DE TUNGSTENE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.09.2004 US 934897**
**24.11.2004 US 997040**

(43) Date of publication of application:
**16.05.2007 Bulletin 2007/20**

(73) Proprietor: **GRUPO PETROTEMEX, S.A. DE C.V.**
**Nuevo Leon (81) 8748-1500 (MX)**

(72) Inventors:
- **XIA, Zhiyong**
  **Gaithersburg, Maryland 20878 (US)**
- **QUILLEN, Donna Rice**
  **Kingsport, TN 37660 (US)**

(74) Representative: **Best, Michael et al**
**Lederer & Keller**
**Patentanwälte**
**Unsöldstrasse 2**
**80538 München (DE)**

(56) References cited:
**WO-A-01/21680** **US-A1- 2002 033 560**
**US-B1- 6 300 399**

- **PATENT ABSTRACTS OF JAPAN vol. 2003, no. 12, 5 December 2003 (2003-12-05) & JP 2003 306601 A (TOYOBO CO LTD), 31 October 2003 (2003-10-31)**
- **PATENT ABSTRACTS OF JAPAN vol. 2000, no. 25, 12 April 2001 (2001-04-12) & JP 2001 226474 A (TOYOBO CO LTD), 21 August 2001 (2001-08-21)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The invention relates to polyester compositions, suitable for molding, that are useful in packaging, such as in the manufacture of beverage containers by reheat blow molding, or other hot forming processes in which polyester is reheated. The compositions exhibit improved reheat, while maintaining acceptable visual appearance, such as clarity and color.

BACKGROUND OF THE INVENTION

Many plastic packages, such as those made from poly(ethylene terephthalate) (PET) and used in beverage containers, are formed by reheat blow-molding, or other operations that require heat softening of the polymer.

In reheat blow-molding, bottle preforms, which are test-tube shaped extrusion moldings, are heated above the glass transition temperature of the polymer, and then positioned in a bottle mold to receive pressurized air through their open end. This technology is well known in the art, as shown, for example in U.S. Pat. No. 3,733,309. In a typical blow-molding operation, radiation energy from quartz infrared heaters is generally used to reheat the preforms.

In the preparation of packaging containers using operations that require heat softening of the polymer, the reheat time, or the time required for the preform to reach the proper temperature for stretch blow molding (also called the heat-up time), affects both the productivity and the energy required. As processing equipment has improved, it has become possible to produce more units per unit time. Thus it is desirable to provide polyester compositions which provide improved reheat properties, by reheating faster (increased reheat rate), or with less reheat energy (increased reheat efficiency), or both, compared to conventional polyester compositions.

The aforementioned reheat properties vary with the absorption characteristics of the polymer itself. Heat lamps used for reheating polymer preforms are typically infrared heaters, such as quartz infrared lamps, having a broad light emission spectrum, with wavelengths ranging from about 500 nm to greater than 1,500 nm. However, polyesters, especially-PET, absorb poorly in the region from 500 nm to 1,500 nm. Thus in order to maximize energy absorption from the lamps and increase the preform's reheat rate, materials that will increase infrared energy absorption are sometimes added to PET. Unfortunately, these materials tend to have a negative effect on the visual appearance of PET containers, for example increasing the haze level and/or causing the article to have a dark appearance. Further, since compounds with absorbance in the range of 400-700 nm appear colored to the human eye, materials that absorb in this wavelength range will impart color to the polymer.

A variety of black and gray body absorbing compounds have been used as reheat agents to improve the reheat characteristics of polyester preforms under reheat lamps. These reheat additives include carbon black, graphite, antimony metal, black iron oxide, red iron oxide, inert iron compounds, spinel pigments, and infrared absorbing dyes. The amount of absorbing compound that can be added to a polymer is limited by its impact on the visual properties of the polymer, such as brightness, which may be expressed as an $L^*$ value, and color, which is measured and expressed as an $a^*$ value and a $b^*$ value, as further described below.

JP 2003-306601 discloses a polyester composition comprising chips of a polyester having main recurring unit of ethylene terephthalate and 0.1-500 ppm polyester fine. The polyester contains at least 1 kind of metal compound selected from the group consisting of Al, Si, Mg, Fe, Co, Zn, Ga, Sr, Zr, Sn, W and Pb. The polyester fine exhibits ≤ 265°C melting peak temperature at the highest temperature side of the melting peak temperature in the case of measuring with a DSC.

JP 2001-226474 discloses a polyester produced in the presence of a germanium compound as a catalyst, characterized by containing a compound containing at least one element selected from the group consisting of Al, Si, Fe, Sr, Zr, Sn, W and Pb in an element amount of 0.001 to 0.5 mol.% based on the acid component of the polyester and having a cyclic trimer increase amount of ≤ 0.30 wt.%, when melted at a temperature of 290°C for 60 min.

US 6,300,399 discloses a filled polyester molding composition which, based on the weight of the total composition, comprises from about 5 to about 40 weight percent of a polyester resin; from about 60 to about 95 percent of tungsten metal filler; and from 0 to 20 weight percent of an impact modifier with a specific gravity greater than about 3.0 g./cc.

To retain an acceptable level of brightness and color in the preform and resulting blown articles, the quantity of reheat additive may be decreased, which in turn decreases reheat rates. Thus, the type and amount of reheat additive added to a polyester resin is adjusted to strike the desired balance between increasing the reheat rate and retaining acceptable brightness and color levels. It would be ideal to simultaneously increase the reheat rate and decrease the rate at which color and brightness degrade as the concentration of the reheat additive in a thermoplastic composition is increased.

There remains a need In the art for polyester compositions, suitable for molding, that contain reheat additives

that improve reheat without the problems associated with known reheat additives, such as unacceptable reductions in brightness, clarity, and color.

SUMMARY OF THE INVENTION

The invention relates to polyester compositions, suitable for molding, that comprise polyester polymers or copolymers, and especially thermoplastic polyester polymers or copolymers, having incorporated therein metallic tungsten particles in which the tungsten metal is provided in the elemental state that improve the reheat properties of the compositions. The tungsten particles may be incorporated in the polyester by melt compounding, or may be added at any stage of the polymerization, such as during the melt-phase of the polymerization. A range of particle sizes may be used, as well as a range of particle size distributions.

The polyester compositions according to the invention are suitable for molding, and are particularly suited for use in packaging in which a reheat step is desirable or necessary, and are provided with metallic tungsten particles in which the tungsten metal is provided in the elemental state to improve reheat efficiency. These compositions may be provided as a melt, in solid form, as preforms such as for blow molding, as sheets suitable for thermoforming, as concentrates, and as bottles, the compositions comprising a polyester polymer, with metallic tungsten particles dispersed in the polyester. Suitable polyesters include polyalkylene terephthalates and polyalkylene naphthalates.

The invention relates also to processes for the manufacture of polyester compositions in which metallic tungsten particles in which the tungsten metal is provided in the elemental state may be added to any stage of a polyester polymerization process, such as during the melt phase for the manufacture of polyester polymers. The metallic tungsten particles may also be added to the polyester polymer which is in the form of solid-stated pellets, or to an injection molding machine for the manufacture of preforms from the polyester polymers.

BRIEF DESCRIPTION OF THE DRAWINGS

**Fig. 1** depicts tungsten particle size distribution of the sample used in Examples 1 through 3 as revealed by scanning electron microscopy;

**Fig. 2** depicts the relationship between the reheat index and the concentration of metallic tungsten particles used as a reheat additive;

**Fig. 3** depicts the impact of the reheat index on the $L^*$ value for a polyester containing metallic tungsten particles;

**Fig. 4** depicts the impact of the reheat index on the haze for a polyester containing metallic tungsten particles;

**Fig. 5** depicts the relationship between the reheat index and a* value for a polyester containing metallic tungsten particles;

**Fig. 6** depicts the relationship between the reheat index and the $b^*$ value of a polyester containing metallic tungsten particles;

**Fig. 7** depicts the effect of additive concentration on the reheat index for metallic tungsten particles added during polyester polymerization process;

**Fig. 8** depicts the relationship between $L^*$ value and reheat index for polyester containing metallic tungsten particles added during polyester polymerization process;

**Fig. 9** depicts the relationship between haze and reheat index for polyesters containing metallic tungsten particles added during polyester polymerization process;

**Fig.10** depicts the relationship between $L^*$ value and reheat index for tungsten metallic particles added by two different methods: addition to the polymerization process (pzn) and by melt compounding into a polyester (cmpd).

DETAILED DESCRIPTION OF THE INVENTION

The present invention may be understood more readily by reference to the following detailed description of the

invention, including the appended figures, and to the examples provided. It is to be understood that this invention is not limited to the specific processes and conditions described, because specific processes and process conditions for processing plastic articles may vary. It is also to be understood that the terminology used is for the purpose of describing particular embodiments only and is not intended to be limiting.

As used in the specification and the claims, the singular forms "a," "an," of and "the" include plural referents unless the context clearly dictates otherwise. For example, reference to processing a thermoplastic "preform," "container" or "bottle" is intended to include the processing of a plurality of thermoplastic preforms, articles, containers, or bottles.

By "comprising" or "containing" we mean that at least the named compound, element, particle, etc must be present in the composition or article, but does not exclude the presence of other compounds, materials, particles, etc., even if the other such compounds, material, particles, etc. have the same function as what is named.

As used herein, a "$d_{50}$ particle size" is the median diameter, where 50% of the volume is composed of particles larger than the stated $d_{50}$ value, and 50% of the volume is composed of particles smaller than the stated $d_{50}$ value. As used herein, the median particle size is the same as the dso particle size.

According to the invention, metallic tungsten particles are used in which the tungsten metal is provided in the elemental state. These particles are to be distinguished from tungsten compounds or complexes. Tungsten compounds are further described in Kirk-Othmer Encyclopedia of Chemical Technology, Vol 24, 4th ed., (1995) pp. 588-600, . Tungsten and tungsten alloys suitable for use according to the invention are further described in Kirk-Othmer Encyclopedia of Chemical-Technology, Vol. 24, 4th ed., (1995) pp. 572-588

The metallic tungsten particles useful according to the claimed invention may predominantly comprise, in terms of weight percent, elemental tungsten metal, with typical-impurities, in which the tungsten metal may be predominantly elemental tungsten, or a tungsten metal alloy in which tungsten may be alloyed with one or more other metals, semi-metals, and/or non-metals so long as the alloys substantially retain the metallic properties of tungsten.

Further, the phase or phases present in the metallic tungsten alloy particles according to-the invention may include amorphous phases, solid solution phases, or intermetallic compound phase solid solutions, and may thus be distinguished from compositions comprised predominantly of tungsten compounds such as those in which the tungsten has a higher oxidation state, although the alloys may, of course, include compounds of tungsten that result from the alloying process, again so long as the alloys substantially retain their metallic properties. -

Alloys useful according to the invention thus include those in which tungsten and one or more other metals or nonmetals are intimately mixed with tungsten, such as when molten, so that they are fused together and dissolved with each other to form, at least in part, a solid solution. We do not mean, of course, to exclude tungsten alloys that have measurable amounts of tungsten compounds present, up to about 50 wt.%, so long as such alloys retain substantial metallic properties, and in any event, the tungsten present substantially retains its metallic properties, the presence of tungsten compounds in the alloy notwithstanding.

Alloys are thus suitable for use according to the invention so long as such alloys comprise at least 20 wt.% tungsten metal, or at least 30 wt.% tungsten, or at least 50 wt.% tungsten, or at least 60 wt.% tungsten, or at least 90 wt.% tungsten, or at least 95 wt.% tungsten, as determined, for example, by elemental analysis, especially when the tungsten is the major alloying element. Not wishing to be bound by any theory, we believe that the effectiveness of tungsten as a reheat additive may be a function of the absorptive properties of the tungsten itself, such as the optical constants in the wavelength of interest, so that tungsten alloys are also suitable for use according to the invention, so long as such alloys have a significant amount of tungsten, such as the minimum amounts of tungsten as already described.

The metallic nickel particles may thus be elemental tungsten, or may be a tungsten metal alloy in which tungsten is alloyed with one or more other materials, such as other metals, so long as such other materials do not substantially affect the ability of the particles to increase the reheat properties of the polymer compositions.

We note that tungsten metal particles can be produced by numerous techniques. Some of these methods are described in the Powder Metallurgy entry in Kirk-Othmer Encyclopedia of Chemical Technology, Vol 16, 4th ed., (1995) pp. 353 - 392. For example, the tungsten metal particles according to the invention may be formed by atomization, reduction, decomposition, electrolytic deposition, precipitation, electrode spinning, high energy impaction, mechanical comminution, condensation, decomposition of metal hydrides, or rapid solidification technology. According to the references from the Encyclopedia of Chemical Technology (Kirk-Othmer, Vol 24, 4th ed., 1995 pp. 588 - 600), tungsten metal powder can be obtained from ammonium paratungstate by stepwise reduction with carbon or hydrogen.

Shapes of metallic tungsten powder which can be used in this invention include, but are not limited to, the following: acicular powder, angular powder, dendritic powder, equi-axed powder, flake powder, fragmented powder, granular powder, irregular powder, nodular powder, platelet powder, porous powder, rounded powder, and spherical powder. The particles may be of a filamentary structure, where the individual particles may be loose aggregates of smaller particles attached to form a bead or chain-like structure. The overall size of the particles may be variable, due to a variation in chain length and degree of branching.

Metallic tungsten particles useful according to the invention for the improvement of reheat and color in polyester compositions include those having a range of particle sizes and particle size distributions, although we have found certain

particle sizes and relatively narrow particle size distributions to be especially suitable in certain applications. For example, in some embodiments, especially those in which the polyester comprises PET, metallic tungsten particles having a median particle size of approximately 0.15 micrometers (μm), and a relatively narrow particle size distribution, are advantageous.

The size of the metallic tungsten particles may thus vary within a broad range depending on the method of production, and the numerical values for the particle sizes may vary according to the shape of the particles and the method of measurement. Particle sizes useful according to the invention may be from about 0.005 μm to about 10 μm, or from 0.05 μm to 1 μm, or from 0.05 μm to 0.9 μm. When the polyester composition comprises PET, we have found that particle sizes from 0.08 μm to 1.1 μm are especially suitable.

The metallic tungsten particles may thus be elemental tungsten, or may include other materials, such as other metals, so long as such other materials do not substantially affect the ability of the particles to increase the reheat efficiency of the polymer compositions.

The particles useful according to the invention may likewise be tungsten hollow spheres or tungsten-coated spheres, in which the core is comprised of tungsten, of mixtures of tungsten with other materials, or of other materials in the substantial absence of tungsten. The tungsten particles may also be coated by a thin layer of tungsten oxide so long as the oxide coating does not substantially affect the ability of the particles to increase the reheat properties of the polymer compositions. Again, not wishing to be bound by any theory, we think it likely that the effectiveness of tungsten as a reheat additive is a function of the absorptive properties of the tungsten itself, so that tungsten-coated particles are suitable for use according to the invention, so long as the coating thickness is sufficient to provide adequate reheat properties. Thus, in various embodiments, the thickness of the coating may be from about 0.005 μm to about 10 μm, or from 0.01 μm to 5 μm, or from 0.10 μm to 0.5 μm. Such tungsten coatings may also comprise tungsten alloys, as already described.

Metal particles, which have a mean particle size suitable for the invention, may have irregular shapes and form chain-like structures, although roughly spherical particles may be preferred. The particle size and particle size distribution may be measured by methods such as those described in the Size Measurement of Particles entry of Kirk-Othmer Encyclopedia of Chemical Technology, 4th ed., vol 22, pp. 256 - 278. For example, particle size and particle size distributions may be determined using a Fisher Subsieve Sizer or a Microtrac Particle-Size Analyzer manufactured by Leeds and Northrop Company, or by microscopic techniques, such as scanning electron microscopy or transmission electron microscopy.

The amount of metallic tungsten particles present in the polyester compositions according to the invention may vary within a wide range, for example from about 0.5 ppm up to about 1,000 ppm, or from 1 ppm to 450 ppm, or from 1 ppm to 400 ppm, or from 1 ppm to 300 ppm, or from 5 ppm to 250 ppm, or from 5 ppm to 200 ppm. Thermoplastic concentrates according to the invention may, of course, have amounts greater than these, as further described elsewhere herein.

The metallic tungsten particles according to the claimed invention may be pure tungsten, or may be particles coated with tungsten, or may be tungsten alloyed with one or more other metals. Metals that can be alloyed with tungsten in amounts up to 50 wt.% or more include germanium, iron, chromium, nickel, molybdenum, titanium, vanadium, carbon, and tantalum. Metals that can be present in minor amounts, for example up to about 10 wt.% or more, include gold, silver, copper, aluminium, manganese, and silicon.

The metallic tungsten particles may thus be elemental tungsten, or may include other materials, such as other metals, so long as such other materials do not substantially affect the ability of the particles to increase the reheat properties of the polymers compositions.

The tungsten metal particles can be coated with a fine layer of tungsten oxide or other coating, so long as the oxide coating does not substantially affect the ability of the tungsten particles to increase the reheat efficiency of the polymer compositions

A range of particle size distributions may be useful according to the invention. The particle size distribution, as used herein, may be expressed by "span (S)," where S is calculated by the following equation:

$$S = \frac{d_{90} - d_{10}}{d_{50}}$$

where $d_{90}$ represents a particle size in which 90% of the volume is composed of particles smaller than the stated $d_{90}$; and $d_{10}$ represents a particle size in which 10% of the volume is composed of particles smaller than the stated $d_{10}$; and $d_{50}$ represents a particle size in which 50% of the volume is composed of particles larger than the stated $d_{50}$ value, and 50% of the volume is composed of particles smaller than the stated $d_{50}$ value.

Thus, particle size distributions in which the span (**S**) is from 0 to 10, or from 0 to 5, or from 0.01 to 2, may be

used according to the invention. In order to obtain a good dispersion of metallic tungsten particles in the polyester compositions, a concentrate, containing for example about 500 ppm metallic tungsten particles, may be prepared using a polyester such as a commercial grade of PET. The concentrate may then be let down into a polyester at the desired concentration, ranging, for example, from about 1 ppm to about 500 ppm, or from about 1 to about 450 ppm.

The amount of metallic tungsten particles used in the polyester will depend upon the particular application, the desired reduction in reheat time, and the toleration level in the reduction of $a^*$ and $b^*$ away from zero along with the movement of $L^*$ brightness values away from 100. Thus, in various embodiments, the quantity of metallic tungsten particles may be at least 1 ppm, or at least 5 ppm, or at least 50 ppm. In many applications, the quantity of metallic tungsten particles may be at least 50 ppm, in some cases at least 60 ppm, and even at least 100 ppm. The maximum amount of metallic tungsten particles may be limited by one or more of the desired reheat rate, or maintenance in $L^*$, $b^*$ and haze, which may vary among applications or customer requirements. In some embodiments, the amount may be less than 500 ppm, or may be at or below 450 ppm, or at or below 400 ppm, or may not exceed 300 ppm. In those applications where color, haze, and brightness are not important features to the application, however, the amount of metallic tungsten particles used may be up to 1,000 ppm, or up to 5,000 ppm, or even up to 10,000 ppm. The amount can exceed 10,000 ppm when formulating a concentrate with metallic tungsten particles as discussed later in this invention.

The method by which the metallic tungsten particles are incorporated into the polyester composition is not limited. The metallic tungsten particles can be added to the polymer reactant system, during or after polymerization, to the polymer melt, or to the molding powder or pellets or molten polyester in the injection-molding machine from which the bottle preforms are made. They may be added at locations including, but not limited to, proximate the inlet to the esterification reactor, proximate the outlet of the esterification reactor, at a point between the inlet and the outlet of the esterification reactor, anywhere along the recirculation loop, proximate the inlet to the prepolymer reactor, proximate the outlet to the prepolymer reactor, at a point between the inlet and the outlet of the prepolymer reactor, proximate the inlet to the polycondensation reactor, or at a point between the Inlet and the outlet of the polycondensation reactor.

The metallic tungsten particles may be added to a polyester polymer, such as PET, and fed to an injection molding machine by any method, including feeding the metallic tungsten particles to the molten polymer in the injection molding machine, or by combining the metallic tungsten particles with a feed of PET to the injection molding machine, either by melt blending or by dry blending pellets.

Alternatively, the metallic tungsten particles may be added to an esterification reactor, such as with and through the ethylene glycol feed optionally combined with-phosphoric acid, to a prepolymer reactor, to a polycondensation reactor, or to solid pellets in a reactor for solid stating, or at any point in-between any of these stages. In each of these cases, the metallic tungsten particles may be combined with PET or its precursors neat, as a concentrate containing PET, or diluted with a carrier. The carrier may be reactive to PET or may be non-reactive. The metallic tungsten particles, whether neat or in a concentrate or in a carrier, and the bulk polyester, may be dried prior to mixing together. These may be dried in an atmosphere of dried air or other inert gas, such as nitrogen, and if desired, under sub-atmospheric pressure.

The impact of a reheat additive on the color of the polymer can be judged using a tristimulus color scale, such as the CIE L*a*b* scale.

The $L^*$ value ranges from 0 to 100 and measures dark to light. The $a^*$ value measures red to green with positive values being red and negative values green. The $b^*$ value measures yellow to blue with yellow having positive values and blue negative values.

Color measurement theory and practice are discussed in greater detail in Principles of Color Technology, pp. 25-66 by Fred W. Billmeyer, Jr., John Wiley & Sons, New York (1981) .

$L^*$ values for the polyester compositions as measured on twenty-ounce bottle preforms discussed herein should generally be greater than 60, more preferably at least 65, and more preferably yet at least 70. Specifying a particular L* brightness does not imply that a preform having a particular sidewall cross-sectional thickness is actually used, but only that in the event the $L^*$ is measured, the polyester composition actually used is, for purposes of testing and evaluating the $L^*$ of the composition, injection molded to make a preform having a thickness of 0.154 inches.

The color of a desirable polyester composition, as measured in twenty-ounce bottle preforms having a nominal sidewall cross-sectional thickness of 0.154 inches, is generally indicated by an $a^*$ coordinate value preferably ranging from about minus 2.0 to about plus 1.0, or from about minus 1.5 to about plus 0.5. With respect to a $b^*$ coordinate value, it is generally desired to make a bottle preform having a $b^*$ value coordinate ranging from minus 3.0 to positive value of less than plus 5.0, or less than plus 4.0, or less than plus 3.8.

Polyesters according to the invention having an acceptable bottle sidewall haze generally-have a haze value, as measured on samples having a cross-sectional thickness of about 0.0125 inches, of less than 6.0%, or less than 5.0%, or less than 4.0%, or 3.0% or less.

The measurements of $L^*$, $a^*$ and $b^*$ color values are conducted according to the following method. The instrument used for measuring $b^*$ color should have the capabilities of a HunterLab UltraScan XE, model U3350, using the CIE Lab Scale (L*, a*, b*), D65 (ASTM) illuminant, 10° observer and an integrating sphere geometry. Clear plaques, films,

preforms, bottles, and are tested in the transmission mode under ASTM D1746 "Standard Test Method for Transparency of Plastic Sheeting." The instrument for measuring color is set up under ASTM E1164 "Standard Practice for Obtaining Spectrophotometric Data for Object-Color Evaluation."

More particularly, the following test methods can be used, depending upon whether the sample is a preform, or a bottle. Color measurements should be performed using a HunterLab UltraScan XE (Hunter Associates Laboratory, Inc., Reston VA), which employs diffuse/8° (illumination/view angle) sphere optical geometry, or equivalent equipment with these same basic capabilities. The color scale employed is the CIE L*a*b* scale with D65 illuminant and 10° observer specified.

Preforms having a mean outer diameter of 0.846 inches and a wall thickness of 0.154 inches, and bottle sidewall sections having a wall thickness of 0.0115 inches to 0.012 inches are measured in regular transmission mode using ASTM D1746, "Standard Test Method for Transparency of Plastic Sheeting". Preforms are held in place in the instrument using a preform holder, available from HunterLab, and triplicate measurements are averaged, whereby the sample is rotated 90° about its center axis between each measurement.

The intrinsic viscosity (It.V.) values described throughout this description are set forth in dUg unit as calculated from the inherent viscosity (Ih.V.) measured at 25°C in 60/40 wt/wt phenol/tetrachloroethane. The inherent viscosity is calculated from the measured solution viscosity. The following equations describe these solution viscosity measurements, and subsequent calculations to Ih.V. and from Ih.V. to It.V:

$$\eta_{inh} = [\ln (t_s/t_o)]/C$$

where

$\eta_{inh}$ = Inherent viscosity at 25°C at a polymer concentration of 0.50 g/ 100 mL of 60% phenol and 40% 1,1,2,2-tetrachloroethane
In = Natural logarithm
$t_s$ = Sample flow time through a capillary tube
to = Solvent-blank flow time through a capillary tube
C = Concentration of polymer in grams per 100 mL of solvent (0.50%)

The intrinsic viscosity is the limiting value at infinite dilution of the specific viscosity of a polymer. It is defined by the following equation:

$$\eta_{int} = \lim_{C \to 0} (\eta_{sp}/C) = \lim_{C \to 0} \ln (\eta_r/C)$$

where

$\eta_{int}$ = intrinsic viscosity
$\eta_r$ = Relative viscosity = ts/to
$\eta_{sp}$ = Specific viscosity = $\eta_{r}$ - 1

Instrument calibration involves replicate testing of a standard reference material and then applying appropriate mathematical equations to produce the "accepted" I.V. values.
Calibration Factor = Accepted IV of Reference Material / Average of Replicate Determinations
Corrected IhV = Calculated IhV x Calibration Factor

The intrinsic viscosity (ItV or $\eta_{int}$) may be estimated using the Billmeyer equation as follows:

$$\eta_{int} = 0.5\ [e^{0.5 \times \text{Corrected IhV}} - 1] + (0.75 \times \text{Corrected IhV})$$

Thus, a beneficial feature provided by polyester compositions containing metallic tungsten particles is that the compositions and preforms made from these compositions have an improved reheat rate, as expressed by twenty-ounce

bottle preform surface temperature (PST), relative to a control without a reheat additive. The higher the PST value, the higher the reheat rate.

In some embodiments the polyester compositions containing metallic tungsten particles in which the tungsten metal is provided in the elemental state, and preforms made from these compositions, may have a $b^*$ color of less than 5.0, or less than 3.8, or less than 3.7, and in any case greater than minus 3.0, even at loadings ranging from 100 ppm to 200 ppm. Similarly, preforms from the polyester compositions according to the invention may have an $L^*$ brightness of at least 60, or at least 65, or at least 70. The compositions may also result in an increase in bottle sidewall percent haze that is much less than compositions containing other types of reheat additives at the same levels of reheat rate. The sidewall bottle haze value measured at a thickness of 0.0125 inches (+/- 0.004) may be 6.0% or less, or 5.0% or less, or even 4.0% or less.

According to the invention, in various embodiments, there are thus provided concentrate compositions comprising metallic tungsten particles in which the tungsten metal is provided in the elemental state in an amount of at least 0.05 wt.%, or at least 2 wt.%, and up to about 20 wt.%, or up to 35 wt.%, and a thermoplastic polymer normally solid at 25°C and 1 atm such as a polyester, polyolefin, or polycarbonate in an amount of at least 65 wt.%, or at least 80 wt.%, or up to 99 wt.% or more, each based on the weight of the concentrate composition. The concentrate may be in liquid, molten state, or solid form. The converter of polymer to preforms has the flexibility of adding metallic tungsten particles to bulk polyester at the injection molding stage continuously, or intermittently, in liquid molten form or as a solid blend, and further adjusting the amount of metallic tungsten particles contained in the preform by metering the amount of concentrate to fit the end use application and customer requirements.

The concentrate may be made by mixing metallic tungsten particles with a polymer such as a polycarbonate, a polyester, a polyolefin, or mixtures of these, in a single or twin-screw extruder, and optionally compounding with other reheat additives. A suitable polycarbonate is bisphenol A polycarbonate. Suitable polyolefins include, but not limited to, polyethylene and polypropylene, and copolymers thereof. Melt temperatures should be at least as high as the melting point of the polymer. For a polyester, such as PET, the melt temperatures are typically in the range of 250°-310°C. Preferably, the melt compounding temperature is maintained as low as possible. The extrudate may be withdrawn in any form, such as a strand form, and recovered according to the usual way such as cutting.

The concentrate may be prepared in a similar polyester as used in the final article. However, in some cases it may be advantageous to use another polymer in the concentrate, such as a polyolefin. In the case where a polyolefin/ metallic tungsten particles concentrate is blended with the polyester, the polyolefin can be incorporated as a nucleator additive for the bulk polyester.

The concentrate may be added to a bulk polyester or anywhere along the different stages for manufacturing PET, in a manner such that the concentrate is compatible with the bulk polyester or its precursors. For example, the point of addition or the It.V. of the concentrate may be chosen such that the It.V. of the polyethylene terephthalate and the It.V. of the concentrate are similar, e.g. +/- 0.2 It.V. measured at 25°C in a 60/40 wt/wt phenol/tetrachloroethane solution. A concentrate can be made with an It.V. ranging from 0.3 dUg to 1.1 dUg to match the typical It.V. of a polyethylene terephthalate under manufacture in the polycondensation stage. Alternatively, a concentrate can be made with an It.V. similar to that of solid-stated pellets used at the injection molding stage (e.g. It.V. from 0.6 dUg to 1.1 dUg).

Other components can be added to the polymer compositions of the present invention to enhance the performance properties of the polyester composition. For example, crystallization aids, impact modifiers, surface lubricants, denesting agents, stabilizers, antioxidants, ultraviolet light absorbing agents, catalyst deactivators, colorants, nucleating agents, acetaldehyde reducing compounds, other reheat enhancing aids, fillers, anti-abrasion additives, and the like can be included. The resin may also contain small amounts of branching agents such as trifunctional or tetrafunctional comonomers such as trimellitic anhydride, trimethylol propane, pyromellitic dianhydride, pentaerythritol, and other polyester forming polyacids or polyols generally known in the art. All of these additives and many others and their use are well known in the art. Any of these compounds can be used in the present composition.

The polyester compositions of the present invention are suitable for molding, and may be used to form preforms used for preparing packaging containers. The preform is typically heated above the glass transition temperature of the polymer composition by passing the preform through a bank of quartz infrared heating lamps, positioning the preform in a bottle mold, and then blowing pressurized air through the open end of the mold.

A variety of other articles can be made from the polyester compositions of the invention. Articles include sheet, film, bottles, trays, other packaging, rods, tubes, lids, and injection molded articles. Any type of bottle can be made from the polyester compositions of the invention. Thus, in one embodiment, there is provided a beverage bottle made from PET suitable for holding water. In another embodiment, there is provided a heat-set beverage bottle suitable for holding beverages which are hot-filled into the bottle. In yet another embodiment, the bottle is suitable for holding carbonated soft drinks.

The metallic tungsten particle reheat additives used in the invention affect the reheat rate, brightness, and color of preforms and the haze value of the bottles made from these preforms. Any one or more of these performance characteristics can be adjusted by varying the amount of reheat additive used, or by changing the particle size, or the

particle size distribution.

The invention also provides processes for making polyester preforms that comprise feeding a liquid or solid bulk polyester and a liquid, molten or solid polyester concentrate composition to a machine for manufacturing the preform, the concentrate being as described elsewhere. According to the invention, not only may the concentrate be added at the stage for making preforms, but in other embodiments, there are provided processes for the manufacture of polyester compositions that comprise adding a concentrate polyester composition to a melt phase for the manufacture of virgin polyester polymers, the concentrate comprising metallic tungsten particles in which the tungsten metal is provided in the elemental state and at least 65 wt.% of a polyester polymer. Alternatively, the tungsten particles may be added to recycled PET.

The polyester compositions according to the invention have a good reheat rate with improved $L^*$ and $b^*$ ratings, and low sidewall bottle haze. The resulting polymers also have excellent solid stating stability.

In yet another embodiment of the invention, there is provided a polyester beverage bottle made from a preform, wherein the preform has a PST of 112°C or more and an $L^*$ value of 60 or more.

In each of the described embodiments, there are also provided additional embodiments encompassing the processes for the manufacture of each, and the preforms and articles, and in particular bottles, blow-molded from the preforms, as well as their compositions containing metallic tungsten particles.

The polyester compositions of this invention may be any thermoplastic polymers, optionally containing any number of ingredients in any amounts, provided that the polyester component of the polymer is present in an amount of at least 30 wt.%, or at least 50 wt.%, or at least 80 wt.%, or even 90 wt.% or more, based on the weight of the polymer, the backbone of the polymer typically including repeating terephthalate or naphthalate units.

Examples of suitable polyester polymers include one or more of: PET, polyethylene naphthalate (PEN), poly (1,4-cyclo-hexylenedimethylene) terephthalate (PGT),poly(ethylene-co-1,4-cyclohexanedimethylene terephthalate) (PETG), copoly(1,4-cyclohexylene dimethylene/ethylene terephthalate) (PCTG) and their blends or their copolymers. The form of the polyester composition is not limited, and includes a melt in the manufacturing process or in the molten state after polymerization, such as may be found in an injection molding machine, and in the form of a liquid, pellets, preforms, and/or bottles. Polyester pellets may be isolated as a solid at 25°C and 1 atm in order for ease of transport and processing. The shape of the polyester pellet is not limited, and is typified by regular or irregular shaped discrete particles and may be distinguished from a sheet, film, or fiber.

It should also be understood that as used herein, the term polyester is intended to include polyester derivatives, including, but not limited to, polyether esters, polyester amides, and polyetherester amides. Therefore, for simplicity, throughout the specification and claims, the terms polyester, polyether ester, polyester amide, and polyetherester amide may be used interchangeably and are typically referred to as polyester, but it is understood that the particular polyester species is dependant on the starting materials, i.e., polyester precursor reactants and/or components.

The location of the metallic tungsten particles within the polyester compositions is not limited. The metallic tungsten particles may be disposed anywhere on or within the polyester polymer, pellet, preform, or bottle. Preferably, the polyester polymer in the form of a pellet forms a continuous phase. By being distributed "within" the continuous phase we mean that the metallic tungsten particles are found at least within a portion of a cross-sectional cut of the pellet. The metallic tungsten particles may be distributed within the polyester polymer randomly, distributed within discrete regions, or distributed only within a portion of the polymer. In a preferred embodiment, the metallic tungsten particles are disposed randomly throughout the polyester polymer composition as by way of adding the metallic tungsten particles to a melt, or by mixing the metallic tungsten particles with a solid polyester composition followed by melting and mixing.

The metallic tungsten particles may be added in an amount so as to achieve a preform surface temperature of at least 112°C, or at least 115°C, or at least 120°C, while maintaining an $L^*$ brightness of 60 or more, when measured at a PST of 112°C.

Suitable amounts of metallic tungsten particles in the polyester compositions (other than polyester concentrate compositions as discussed elsewhere), preforms, and containers, may thus range from about 0.5 to about 500 ppm, based on the weight of the polymer in the polyester compositions, or as already described. The amount of the metallic tungsten particles used may depend on the type and quality of the metallic tungsten particles, the particle size, surface area, the morphology of the particle, and the level of reheat rate improvement desired.

The particle size may be measured with a laser diffraction type particle size distribution meter, or scanning or transmission electron microscopy methods. Alternatively, the particle size can be correlated by a percentage of particles screened through a mesh. Metallic tungsten particles having a particle size distribution in which at least 80%, preferably at least 90%, more preferably at least 95% of the particles fall through an ASTM-E11 140 sieve are suitable for use as reheat agents. Metallic tungsten particles having a particle size distribution in which at least 80%, preferably at least 90%, more preferably at least 95% of the particles fall through a ASTM-E11 325 sieve are also suitable for use as reheat agents.

The metallic tungsten particles used in the invention not only enhance the reheat rate of a preform, but have only a minimal impact on the brightness of the preforms and bottles by not reducing the $L^*$ below acceptable levels. An

acceptable L* value of preforms or bottles is deemed 60 or more when measured at a PST of 112°C.

In various other embodiments, there are provided polyester compositions, whether in the form of a melt, pellets, sheets, preforms, and/or bottles, comprising at least 0.5 ppm, or at least 50 ppm, or at least 100 ppm metallic tungsten particles in which the tungsten metal is provided in the elemental state, having a $d_{50}$ particle size of less than 100 μm, or less than 50 μm, or less than 1 μm or less, wherein the polyester compositions have an L* value of 65 or more, or 68 or more, or even 70 or more, when measured at a PST of 112°C, or 115°C, or 120°C....

According to various embodiments of the invention, metallic tungsten particles in which the tungsten metal is provided in the elemental state may be added at any point during polymerization, which includes to the esterification zone, to the polycondensation zone comprised of the prepolymer zone and the finishing zone, to or prior to the pelletizing zone, and at any point between or among these zones. The metallic tungsten particles may also be added to solid-stated pellets as they are exiting the solid-stating reactor. Furthermore, metallic tungsten particles may be added to the PET pellets in combination with other feeds to the injection molding machine, or may be fed separately to the injection molding machine. For clarification, the metallic tungsten particles may be added in the melt phase or to an injection molding machine without solidifying and isolating the polyester composition into pellets. Thus, the metallic tungsten particles can also be added in a melt-to-mold process at any point in the process for making the preforms. In each instance at a point of addition, the metallic tungsten particles can be added as a powder neat, or in a liquid, or a polymer concentrate, and can be added to virgin or recycled PET, or added as a polymer concentrate using virgin or recycled PET as the PET polymer carrier.

In other embodiments, the invention relates to processes for the manufacture of polyester compositions containing metallic tungsten particles in which the tungsten metal is provided in the elemental state , such as polyalkylene terephthalate or naphthalate polymers made by transesterifying a dialkyl terephthalate or dialkyl naphthalate or by directly esterifying terephthalic acid or naphthalene dicarboxylic acid.

Thus, there are provided processes for making polyalkylene terephthalate or naphthalate polymer compositions by transesterifying a dialkyl terephthalate or naphthalate or directly esterifying a terephthalic acid or naphthalene dicarboxylic acid with a diol, adding metallic tungsten particles to the melt phase for the production of a polyalkylene terephthalate or naphthalate after the prepolymer zone, or to polyalkylene terephthalate or naphthalate solids, or to an injection molding machine for the manufacture of bottle preforms.

Each of these process embodiments, along with a description of the polyester polymers, is now explained in further detail.

The polyester polymer suitable for molding may be PET, PEN, or. copolymers, or mixtures, thereof. A preferred polyester polymer is polyethylene terephthalate. As used herein, a polyalkylene terephthalate polymer or polyalkylene naphthalate polymer means a polymer having polyalkylene terephthalate units or polyalkylene naphthalate units in an amount of at least 60 mole% based on the total moles of units in the polymer, respectively. Thus, the polymer may contain ethylene terephthalate or naphthalate units in an amount of at least 85 more%, or at least 90 mole%, or at least 92 more%, or at least 96 mole%, as measured by the mole% of ingredients added to the reaction mixture. Thus, a polyethylene terephthalate polymer may comprise a copolyester of ethylene terephthalate units and other units derived from an alkylene glycol or aryl glycol with an aliphatic or aryl dicarboxylic acid.

While reference is made in certain instances to polyethylene terephthalate, it is to be understood that the polymer may also be a polyalkylene naphthalate polymer or another polyester described herein.

Polyethylene terephthalate can be manufactured by reacting a diacid or diester component comprising at least 60 mole % terephthalic acid or $C_1$ - $C_4$ dialkylterephthalate, or at least 70 mole %, or at least 85 mole %, or at least 90 mole %, and for many applications at least 95 mole%, and a diol component comprising at least 60 mole % ethylene glycol, or at least 70 mole %, or at least 85 mole %, or at least 90 mole %, and for many applications, at least 95 mole %. It is preferable that the diacid component is terephthalic acid and the diol component is ethylene glycol. The mole percentage for all the diacid component(s) totals 100 mole %, and the mole percentage for all the diol component(s) totals 100 mole %.

The polyester pellet compositions may include admixtures of polyalkylene terephthalates, PEN, or mixtures thereof, along with other thermoplastic polymers, such as polycarbonates (PC) and polyamides. It is preferred in many instances that the polyester composition comprise a majority of a polyalkylene terephthalate polymers or PEN polymers, or in an amount of at least 80 wt.%, or at least 95 wt.%, based on the weight of polymers (excluding fillers, compounds, inorganic compounds or particles, fibers, impact modifiers, or other polymers which may form a discontinuous phase). In addition to units derived from terephthalic acid, the acid component of the present polyester may be modified with, or replaced by, units derived from one or more additional dicarboxylic acids, such as aromatic dicarboxylic acids preferably having from 8 to 14 carbon atoms, aliphatic dicarboxylic acids preferably having 4 to 12 carbon atoms, or cycloaliphatic dicarboxylic acids preferably having 8 to 12 carbon atoms.

Examples of dicarboxylic acid units useful for the acid component are units from phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic 'acid, sebacic acid, and the like, with isophthalic acid, naphthalene-2,6-dicarboxylic acid, and cyclohexanedicarboxylic acid being preferable.

It should be understood that use of the corresponding acid anhydrides, esters, and acid chlorides of these acids is included in the term "dicarboxylic acid".

In addition to units derived from ethylene glycol, the diol component of the present polyester may be modified with, or replaced by, units from other diols including cycloaliphatic diols preferably having 6 to 20 carbon atoms and aliphatic diols preferably having 2 to 20 carbon atoms. Examples of such diols include diethylene glycol (DEG); triethylene glycol; 1,4-cyclohexanedimethanol; propane-1,3-diol; butane-1,4-diol; pentane-1,5-diol; hexane-1,6-diol; 3-methylpentanediol- (2,4); 2-methylpentanediol-(1,4); 2,2,4-trimethylpentane-diol-(1,3); 2,5-ethylhexanediol-(1,3); 2,2-diethyl propane-diol-(1, 3); hexanediol-(1,3); 1,4-di-(hydroxyethoxy)-benzene; 2,2-bis-(4-hydroxycyclohexyl)-propane; 2,4- dihydroxy-1,1,3,3-tetramethyl-cyclobutane; 2,2-bis-(3-hydroxyethoxyphenyl)-propane; and 2,2-bis-(4-hydroxypropoxyphenyl)-propane.

The polyester compositions of the invention may be prepared by conventional polymerization procedures well-known in the art sufficient to effect esterification and polycondensation. Polyester melt phase manufacturing processes include direct condensation of a dicarboxylic acid with a diol optionally in the presence of esterification catalysts in the esterification zone, followed by polycondensation in the prepolymer and finishing zones in the presence of a polycondensation catalyst; or else ester interchange usually in the presence of a transesterification catalyst in the esterification zone, followed by prepolymerization and finishing in the presence of a polycondensation catalyst, and each may optionally be subsequently solid-stated according to known methods. After melt phase and/or solid-state polycondensation the polyester polymer compositions typically have an intrinsic viscosity (It.V.) ranging from 0.55 dUg to about 0.70 dUg as precursor pellets, and an It.V. ranging from about 0.70 dUg to about 1.1 dUg for solid stated pellets.

To further illustrate, a mixture of one or more dicarboxylic acids, preferably aromatic dicarboxylic acids, or ester forming derivatives thereof, and one or more diols, are continuously fed to an esterification reactor operated at a temperature of between about 200°C and 300°C, typically between 240°C and 290°C, and at a pressure of about 1 psig up to about 70 psig. The residence time of the reactants typically ranges from between about one and five hours. Normally, the dicarboxylic acid is directly esterified with diol(s) at elevated pressure and at a temperature of about 240°C to about 270°C. The esterification reaction is continued until a degree of esterification of at least 60% is achieved, but more typically until a degree of esterification of at least 85% is achieved to make the desired monomer. The esterification monomer reaction is typically uncatalyzed in the direct esterification process and catalyzed in transesterification processes. Polycondensation catalysts may optionally be added in the esterification zone along with esterification/transesterification catalysts.

Typical esterification/transesterification catalysts which may be used include titanium alkoxides, dibutyl tin dilaurate, used separately or in combination, optionally with zinc, manganese, or magnesium acetates or benzoates and/or other such catalyst materials as are well known to those skilled in the art. Phosphorus-containing compounds and cobalt compounds may also be present in the esterification zone. The resulting products formed in the esterification zone include bis(2-hydroxyethyl) terephthalate (BHET) monomer, low molecular weight oligomers, DEG, and water as the condensation by-product, along with other trace impurities formed by the reaction of the catalyst and other compounds such as colorants or the phosphorus-containing compounds. The relative amounts of BHET and oligomeric species will vary depending on whether the process is a direct esterification process, in which case the amount of oligomeric species are significant and even present as the major species, or a transesterification process, in which case the relative quantity of BHET predominates over the oligomeric species. The water is removed as the esterification reaction proceeds and excess ethylene glycol is removed to provide favorable equilibrium conditions. The esterification zone typically produces the monomer and oligomer mixture, if any, continuously in a series of one or more reactors. Alternatively, the monomer and oligomer mixture could be produced in one or more batch reactors.

It is understood, however, that in a process for making PEN, the reaction mixture will contain monomeric species such as bis(2-hydroxyethyl) naphthalate and its corresponding oligomers. Once the ester monomer is made to the desired degree of esterification, it is transported from the esterification reactors in the esterification zone to the polycondensation zone comprised of a prepolymer zone and a finishing zone.

Polycondensation reactions are initiated and continued in the melt phase in a prepolymerization zone and finished in the melt phase in a finishing zone, after which the melt is solidified into precursor solids in the form of chips, pellets, or any other shape. For convenience, solids are referred to as pellets, but it is understood that a pellet can have any shape, structure, or consistency. If desired, the polycondensation reaction may be continued by solid-stating the precursor pellets in a solid-stating zone.

Although reference is made to a prepolymer zone and a finishing zone, it is to be understood that each zone may comprise a series of one or more distinct reaction vessels operating at different conditions, or the zones may be combined into one reaction vessel using one or more sub-stages operating at different conditions in a single reactor. That is, the prepolymer stage can involve the use of one or more reactors operated continuously, one or more batch reactors or even one or more reaction steps or sub-stages performed in a single reactor vessel. In some reactor designs, the prepolymerization zone represents the first half of polycondensation in terms of reaction time, while the finishing

zone represents the second half of polycondensation. While other reactor designs may adjust the residence time between the prepolymerization zone to the finishing zone at about a 2:1 ratio, a common distinction in all designs between the prepolymerization zone and the finishing zone is that the latter zone operates at a higher temperature, lower pressure, and a higher surface renewal rate than the operating conditions in the prepolymerization zone. Generally, each of the prepolymerization and the finishing zones comprise one or a series of more than one reaction vessel, and the prepolymerization and finishing reactors are sequenced in a series as part of a continuous process for the manufacture of the polyester polymer.

In the prepolymerization zone, also known in the industry as the low polymerizer, the low molecular weight monomers and minor amounts of oligomers are polymerized via polycondensation to form polyethylene terephthalate polyester (or PEN polyester) in the presence of a catalyst. If the catalyst was not added in the monomer esterification stage, the catalyst is added at this stage to catalyze the reaction between the monomers and low molecular weight oligomers to form prepolymer and split off the diol as a by-product. If a polycondensation catalyst was added to the esterification zone, it is typically blended with the diol and fed into the esterification reactor as the diol feed. Other compounds such as phosphorus-containing compounds, cobalt compounds, and colorants can also be added in the prepolymerization zone. These compounds may, however, be added in the finishing zone instead of or in addition to the prepolymerization zone.

In a typical DMT-based process, those skilled in the art recognize that other catalyst material and points of adding the catalyst material and other ingredients vary from a typical direct esterification process.

Typical polycondensation catalysts include the compounds of antimony, titanium, germanium, zinc and tin in an amount ranging from 0.1 to 1,000 ppm based on the weight of resulting polyester polymer. A common polymerization catalyst added to the prepolymerization zone is an antimony-based polymerization catalyst. Suitable antimony-based catalysts include antimony (III) and antimony (V) compounds recognized in the art, and in particular, diol-soluble antimony (III) and antimony (V) compounds with antimony (III) being most commonly used. Other suitable compounds include those antimony compounds that react with, but are not necessarily soluble in, the diols, with examples of such compounds including antimony (III) oxide. Specific examples of suitable antimony catalysts include antimony (III) oxide and antimony (III) acetate, antimony (III) glycolates, antimony (III) ethyleneglycoxide and mixtures thereof, with antimony (III) oxide being preferred. The preferred amount of antimony catalyst added is that effective to provide a level of between about 75 and about 400 ppm of antimony by weight of the resulting polyester.

This prepolymer polycondensation stage generally employs a series of two or more vessels and is operated at a temperature of between about 250°C and 305° C for between about one and four hours. During this stage, the It.V. of the monomers and oligomers is typically increased up to about no more than 0.35 dUg. The diol byproduct is removed from the prepolymer melt using an applied vacuum ranging from 15 to 70 torr to drive the reaction to completion. In this regard, the polymer melt is typically agitated to promote the escape of the diol from the polymer melt and to assist the highly viscous polymer melt in moving through the polymerization vessels. As the polymer melt is fed into successive vessels, the molecular weight and thus the intrinsic viscosity of the polymer melt increases. The temperature of each vessel is generally increased and the pressure decreased to allow for a greater degree of polymerization in each successive vessel. However, to facilitate removal of glycols, water, alcohols, aldehydes, and other reaction products, the reactors are typically run under a vacuum or purged with an inert gas. Inert gas is any gas which does not cause unwanted reaction or product characteristics at reaction conditions. Suitable gases include, but are not limited to, carbon dioxide, argon, helium, and nitrogen.

Once an It.V. of typically no greater than 0.35 dUg is obtained, the prepolymer is fed from the prepolymer zone to a finishing zone where the second half of polycondensation is continued in one or more finishing vessels ramped up to higher temperatures than present in the prepolymerization zone, to a value within a range of from 280°C to 305°C until the It.V. of the melt is increased from the It.V of the melt in the prepolymerization zone (typically 0.30 dL/g but usually not more than 0.35 dL/g) to an It.V in the range of from about 0.50 dUg to about 0.70 dUg. The final vessel, generally known in the industry as the "high polymerizer," "finisher," or "polycondenser," is operated at a pressure lower than used in the prepolymerization zone, typically within a range of between about 0.8 and 4.0 torr. Although the finishing zone typically involves the same basic chemistry as the prepolymer zone, the fact that the size of the molecules, and thus the viscosity, differs, means that the reaction conditions also differ. However, like the prepolymer reactor, each of the finishing vessel(s) is connected to a flash vessel and each is typically agitated to facilitate the removal of ethylene glycol.

The residence time in the polycondensation vessels and the feed rate of the ethylene glycol and terephthalic acid into the esterification zone in a continuous process is determined in part based on the target molecular weight of the polyethylene terephthalate polyester. Because the molecular weight can be readily determined based on the It.V. of the polymer melt, the It.V. of the polymer melt is generally used to determine polymerization conditions, such as temperature, pressure, the feed rate of the reactants, and the residence time within the polycondensation vessels.

Once the desired It.V. is obtained in the finisher, the melt is fed to a pelletization zone where it is filtered and extruded into the desired form. The polyester polymers of the present invention are filtered to remove particulates over

a designated size, followed by extrusion in the melt phase to form polymer sheets, filaments, or pellets. Although this zone is termed a "pelletization zone," it is understood that this zone is not limited to solidifying the melt into the shape of pellets, but includes solidification into any desired shape. Preferably, the polymer melt is extruded immediately after polycondensation. After extrusion, the polymers are quenched, preferably by spraying with water or immersing in a water trough, to promote solidification. The solidified condensation polymers are cut into any desired shape, including pellets.

As known to those of ordinary skill in the art, the pellets formed from the condensation polymers, in some circumstances, may be subjected to a solid-stating zone wherein the solids are first crystallized followed by solid-state polymerization (SSP) to further increase the It.V. of the polyester composition solids from the It.V exiting the melt phase to the desired It.V. useful for the intended end use. Typically, the It.V. of solid stated polyester solids ranges from 0.70 dL/g to 1.15 dL/g. In a typical SSP process, the crystallized pellets are subjected to a countercurrent flow of nitrogen gas heated to 180°C to 220°C, over a period of time as needed to increase the It.V. to the desired target.

Thereafter, polyester polymer solids, whether solid stated or not, are remelted and re-extruded to form items such as containers (e.g., beverage bottles), filaments, films, or other applications. At this stage, the pellets are typically fed into an injection molding machine suitable for making preforms which are stretch blow molded into bottles.

As noted, metallic tungsten particles may be added at any point in the melt phase or thereafter, such as to the esterification zone, to the prepolymerization zone, to the finishing zone, or to the pelletizing zone, or at any point between each of these zones, such as to metering devices, pipes, and mixers. The metallic tungsten particles can also be added to the pellets in a solid stating zone within the solid stating zone or as the pellets exit the solid-stating reactor. Furthermore, the metallic tungsten particles may be added to the pellets in combination with other feeds to the injection molding machine or fed separately to the injection molding machine.

If the metallic tungsten particles are added to the melt phase, it is desirable to use particles having a small enough $d_{50}$ particle size to pass through the filters in the melt phase, and in particular the pelletization zone. In this way, the particles will not clog up the filters as seen by an increase in gear pump pressure needed to drive the melt through the filters. However, if desired, the metallic tungsten particles can be added after the pelletization zone filter and before or to the extruder.

Thus, according to the invention, metallic tungsten parficles, in which the tungsten metal is provided in the elemental state of a wide range of $d_{50}$ particle sizes can be added either together with a phosphorus-containing compound to the esterification zone, the prepolymer zone, or at any point in between, or after the addition of a phosphorus compound to the esterification zone prior to completing the esterification reaction to the desired degree, or after the addition of the phosphorus compound to any zone and to a reaction mixture containing an active phosphorus compound. The point at which the metallic tungsten particles are added, or the presence or absence of such other active compounds in the melt, is not limited since the metallic tungsten particles function to enhance the rate of reheat. The function of the metallic tungsten particles as a reheat enhancing additive allows a wide operating window and flexibility to add the metallic tungsten particles at any convenient point, even in the presence of active phosphorus-containing compounds in the melt phase.

Thus, the metallic tungsten particles may be added together with phosphorus compounds either as a mixture in a feedstock stream to the esterification or prepolymer zone, or as separate feeds but added to the reaction mixture within the zone simultaneously. Alternatively, the metallic tungsten particles may be added to a reaction mixture within the esterification zone after a phosphorus compound has been added to the same zone and before completion of the esterification reaction.

Typical phosphorus-containing compounds added in the melt phase include acidic phosphorus-containing compounds recognized in the art. Suitable examples of such additives include phosphoric acid, phosphorous acid, potyphosphoric acid, carboxyphosphonic acids, and each of their derivatives including acidic phosphate esters such as phosphate mono- and di-esters and non-acidic phosphate esters such as trimethyl phosphate, triethyl phosphate, tributyl phosphate, tributoxyethyl phosphate, tris(2- ethylhexyl) phosphate, trioctyl phosphate, triphenyl phosphate, tritolyl phosphate, ethylene glycol phosphate, triethyl phosphonoacetate, dimethyl methyl phosphonate, tetraisopropyl methylenediphosphonate, mixtures of mono-, di-, and triesters of phosphoric acid with ethylene glycol, diethylene glycol, and 2-ethylhexanol, or mixtures of each, among others.

In addition to adding metallic tungsten particles to virgin polymer, whether to make a concentrate or added neat to the melt phase after the prepolymerization reactors or to an injection molding zone, metallic tungsten particles may also be added to post-consumer recycle (PCR) polymer. PCR containing metallic tungsten particles is added to virgin bulk polymers by solid/solid blending or by feeding both solids to an extruder. Alternatively. PCR polymers containing metallic tungsten particles are advantageously added to the melt phase for making virgin polymer between the prepolymerization zone and the finishing zone. The It.V. of the virgin melt phase after the prepolymerization zone is sufficiently high at that point to enable the PCR to be melt blended with the virgin melt. Alternatively, PCR may be added to the finisher. In either case, the PCR added to the virgin melt phase may contain the metallic tungsten particles. The metallic tungsten particles may be combined with PCR by any of the methods noted above, or separately fed to and melt blended in a heated vessel, followed by addition of the PCR melt containing the metallic tungsten particles to the virgin melt

phase at these addition points.

Other components can be added to the compositions of the present invention to enhance the performance properties of the polyester polymers. For example, crystallization aids, impact modifiers, surface lubricants, denesting agents, compounds, antioxidants, ultraviolet light absorbing agents, catalyst deactivators, colorants, nucleating agents, acetaidehyde reducing compounds, other reheat rate enhancing aids, sticky bottle additives such as talc, and fillers and the like can be included. The polymer may also contain small amounts of branching agents such as trifunctional or tetrafunctional comonomers such as trimellitic anhydride, trimethylol propane, pyromellitic dianhydride, pentaerythritol, and other polyester forming polyacids or diols generally known in the art. All of these additives and many others and their use are well known in the art and do not require extensive discussion. Any of these compounds can be used in the present composition. It is preferable that the present composition be essentially comprised of a blend of thermoplastic polymer and metallic tungsten particles, with only a modifying amount of other ingredients being present.

Examples of other reheat rate enhancing additives that may be used in combination with metallic tungsten particles include carbon black, antimony metal, tin, copper, silver, gold, palladium, platinum, black iron oxide, and the like, as well as near infrared absorbing dyes, including, but not limited to, those disclosed in U.S. Pat. No. 6,197,851

The iron oxide, which is preferably black, may be used in very finely divided form, e.g., from about 0.01 to about 200 μm, or from about 0.1 to about 10.0 μm, or from about 0.2 to about 5.0 μm. Suitable forms of black iron oxide include, but are not limited to, magnetite and maghemite. Red iron oxide is less preferred as it imparts an undesirable red hue to the resultant polymer. Such oxides are described, for example, on pages 323-349 of Pigment Handbook, Vol. 1 (1973), John Wiley & Sons

The compositions of the present invention optionally may additionally contain one or more UV absorbing compounds. One example includes UV-absorbing compounds which are covalently bound to the polyester molecule as either a comonomer, a side group, or an end group. Suitable UV-absorbing compounds are thermally stable at polyester processing temperatures, absorb in the range of from about 320 nm to about 380 nm, and are nonextractable from the polymer. The UV-absorbing compounds preferably provide less than about 20%, more preferably less than about 10%, transmittance of UV light having a wavelength of 370 nm through a bottle wall 305 μm thick. Suitable chemically reactive UV absorbing compounds may include, for example, substituted methine compounds.

Suitable compounds, their methods of manufacture and incorporation into polyesters are further disclosed in U.S. Pat. No. 4,617,374. . The UV-absorbing compound(s) may be present in amounts between about 1 ppm to about 5,000 ppm by weight, preferably from about 2 ppm to about 1,500 ppm, and more preferably between about 10 and about 500 ppm by weight. Dimers of the UV absorbing compounds may also be used. Mixtures of two or more UV absorbing compounds may be used. Moreover, because the UV absorbing compounds are reacted with or copolymerized into the backbone of the polymer, the resulting polymers display improved processability including reduced loss of the UV absorbing compound due to plateout and/or volatilization and the like.

The polyester compositions of the present invention, suitable for molding, may be used to form a variety of shaped articles, including films, sheets, tubes, preforms, molded articles, containers, and the like. Suitable processes for forming the articles are known and include extrusion, extrusion blow molding, melt casting, injection molding, stretch blow molding, thermoforming, and the like.

The polyesters of this invention may also, optionally, contain color stabilizers, such as certain cobalt compounds. These cobalt compounds can be added as cobalt acetates or cobalt alcoholates (cobalt salts or higher alcohols). They can be added as solutions in ethylene glycol. Polyester resins containing high amounts of the cobalt additives can be prepared as a masterbatch for extruder addition. The addition of the cobalt additives as color toners is a process used to minimize or eliminate the yellow color, b*, of the resin. Other cobalt compounds such as cobalt aluminate, cobalt benzoate, cobalt chloride and the like may also be used as color stabilizers. It is also possible to add certain diethylene glycol (DEG) inhibitors to reduce or prevent the formation of DEG in the final resin product. Preferably, a specific type of DEG inhibitor would comprise a sodium acetate-containing composition to reduce formation of DEG during the esterification and polycondensation of the applicable diol with the dicarboxylic acid or hydroxyalkyl, or hydroxyalkoxy substituted carboxylic acid. It is also possible to add stress crack inhibitors to improve stress crack resistance of bottles, or sheeting, produced from this resin.

With regard to the type of polyester which can be utilized, any high clarity, neutral hue polyester, copolyester, etc., in the form of a resin, powder, sheet, etc., can be utilized to which it is desired to improve the reheat time or the heat-up time of the resin. Thus, polyesters made from either the dimethyl terephthalate or the terephthalic acid route or various homologues thereof as well known to those skilled in the art along with conventional catalysts in conventional amounts and utilizing conventional processes can be utilized according to the present invention. Moreover, the type of polyester can be made according to melt polymerization, solid state polymerization, and the like. Moreover, the present invention can be utilized for making high clarity, low haze powdered coatings. An example of a preferred type of high clarity polyester resin is set forth herein below wherein the polyester resin is produced utilizing specific amounts of antimony catalysts, low amounts of phosphorus and a bluing agent which can be a cobalt compound.

As noted above, the polyester is produced in a conventional manner as from the reaction of a dicarboxylic acid

having from 2 to 40 carbon atoms with polyhydric alcohols such as glycols or diols containing from 2 to about 20 carbon atoms. The dicarboxylic acids can be an alkyl having from 2 to 20 carbon atoms, or an aryl, or alkyl substituted aryl containing from 8 to 16 carbon atoms. An alkyl diester having from 4 to 20 carbon atoms or an alkyl substituted aryl diester having from 10 to 20 carbon atoms can also be utilized. Desirably, the diols can contain from 2 to 8 carbon atoms and preferably is ethylene glycol. Moreover, glycol ethers having from 4 to 12 carbon atoms may also be used. Generally, most of the commonly produced polyesters are made from either dimethyl terephthalate or terephthalic acid with ethylene glycol. When powdered resin coatings are made, neopentyl glycol is often used in substantial amounts.

Specific areas of use of the polyester include situations wherein preforms exist which then are heated to form a final product, for example, as in the use of preforms which are blow-molded to form a bottle, for example, a beverage bottle, and the like. Another use is in preformed trays, preformed cups, and the like, which are heated and drawn to form the final product. Additionally, the present invention is applicable to highly transparent, clear and yet low haze powdered coatings wherein a desired transparent film or the like is desired.

This invention can be further illustrated by the following examples of preferred embodiments, although it will be understood that these examples are included merely for purposes of illustration and are not intended to limit the scope of the invention unless otherwise specifically indicated.

EXAMPLES

**Example 1**

In this example, metallic tungsten particles were purchased from Alfa Aesar (Stock number 44210) having a stated particle size of less than 1 μm. The particles were found to have a $d_{50}$ of 0.42 μm, with a particle size range from about 0.20 μm to about 0.72 μm, as measured by scanning electron microscopy.

The metallic tungsten particles were added during melt compounding to a commercial PET resin, VORIDIAN ™ 9921 Polymer (a copolymer PET that has been crystallized and has an It.V. of 0.8 dUg, available from Eastman Chemical Company, Kingsport, Tennessee). A concentrate containing 479.9 ppm tungsten was prepared using VORIDIAN 9921 Polymer as the base resin. The extrusions were performed using a one-inch single-screw extruder with Saxton and Pineapple mixing head. The extruder was also equipped with pelletization capability. The concentrates were then let down into 9921 Polymer at different concentrations ranging from 5 ppm to 479.9 ppm. During the compounding process, 9921 Polymer was used to purge the extruder barrel several times to ensure no cross contamination occurred between different batches.

After melt compounding, discs with a diameter of 3 cm and a thickness of 0.17 cm were molded using a Daca® Microcompounder/Microinjector. Molded discs were also prepared from the 9921 Polymer as a control. The molded discs were then used for both color (L*, a*, b* and haze) and reheat measurements.

Color measurement of the molded discs was conducted in the following manner. A HunterLab UltraScan spectrophotometer was used to measure L*, a* and b* on three discs stacked together (approximately 0.51 cm thickness). The instrument was operated using a D65 illuminant light source with a 10° observation angle and integrating sphere geometry. The color measurements were made in the total transmission (TTRAN) mode, in which both light transmitted directly through the sample and the light that is diffusely scattered is measured. The discs were stacked together using a holder in front of the light source, with the light normally incident on the disc surface. Haze was determined as the ratio of the diffuse light intensity to the total light intensity transmitted by the specimen. Haze was calculated according to the following formula:

$$Haze = \left( \frac{Y_{diffusetransmission}}{Y_{totaltransmission}} \right) \times 100$$

where Y represents the intensity of light.

The reheat measurement on molded discs was carried out as follows. The disc was placed onto a support which was in contact with the sample along its edges only. An actuator then automatically moved the disc beneath a pyrometer and measured the initial temperature ($T_I$). The disc was then moved to a fixed distance below a lamp housing equipped with a bulb (GE DYH projection bulb, 250 W, 120 V) operating at 60 V. The sample was exposed to a radiant light for 20 seconds. The color temperature of the lamp was approximately 2,200 °C. After heating, the disc was automatically returned to the pyrometer where the surface temperature ($T_f$) of the center area of the side which faced the lamp (front side) was recorded two seconds after the lamp was turned off. A 90 second cooling cycle was used between consecutive tests, during which a fan cooled the lamp housing prior to loading the next sample. The reheat index (known as RHI) was then calculated by comparing the temperature difference of a test sample with that of the control sample

as shown in the following equation:

$$RHI = \frac{(T_f - T_i)_{sample}}{(T_f - T_i)_{control}}$$

As shown in Figure 1, Tables 1 and 2 below, the particle size of the tungsten powder was in the range of 0.20 μm to 0.72 μm with a mean value of 0.42 μm, and a standard deviation of 0.11 μm.

Table 1. Quantiles of the particle size analysis

| Cumulative percentage | Statistical notation | Particle diameter (μm) |
|---|---|---|
| 100.00% | maximum | 0.71 |
| 99.50% | | 0.71 |
| 97.50% | | 0.68 |
| 90.00% | | 0.56 |
| 75.00% | quartile | 0.50 |
| 50.00% | median | 0.42 |
| 25.00% | quartile | 0.33 |
| 10.00% | | 0.27 |
| 2.50% | | 0.22 |
| 0.50% | | 0.21 |
| 0.00% | minimum | 0.21 |

**Table 2.** Moments of the particle size analysis

| | |
|---|---|
| Mean | 0.42 |
| Std Dev | 0.11 |
| Std Err Mean | 0.01 |
| upper 95% Mean | 0.44 |
| lower 95%Mean | 0.40 |
| N | 110 |

The final tungsten concentration in the polymers was determined by inductively coupled plasma optical emission spectroscopy (ICP-OES) using a Perkin-Elmer Optima 2000 instrument. The levels of loading of tungsten and the color and reheat results are shown in Table 3.

**Table 3.** Reheat and color results of melt compounded samples with tungsten as a reheat additive

| Sample | Reheat additive | Measured tungsten concentration (ppm) | RHI | L* | a* | b* | Haze | WI CIE |
|---|---|---|---|---|---|---|---|---|
| 1 | none | 0 | 1.00 | 83.60 | -0.80 | 4.20 | 2.26 | 41.98 |
| 2 | W | 479.9 | 1.38 | 54.65 | -1.18 | 1.85 | 37.72 | 9.33 |
| 3 | W | 44.6 | 1.05 | 79.25 | -0.92 | 4.53 | 6.64 | 31.31 |
| 4 | W | 91.2 | 1.09 | 76.31 | -0.97 | 4.64 | 11.20 | 24.97 |
| 5 | W | 183.5 | 1.18 | 70.22 | -1.11 | 4.00 | 18.55 | 17.60 |
| 6 | W | 410.7 | 1.39 | 54.80 | -0.83 | 2.33 | 35.82 | 6.09 |
| 7 | W | 39.7 | 1.06 | 79.66 | -0.87 | 4.44 | 6.70 | 32.63 |
| 8 | W | 14.1 | 1.03 | 82.52 | -0.86 | 4.15 | 3.57 | 39.98 |
| 9 | W | 76.4 | 1.10 | 77.19 | -0.86 | 3.78 | 9.94 | 31.37 |

Figure 2 shows the relationship between RHI and the concentration of tungsten (note: in this example, RHI is calculated using 9921 Polymer as the reference sample). These results show that metallic tungsten particles are very effective at increasing the RHI of the base resin.

In Figure 3, the relationship between RHI and L* is illustrated for a polyester containing metallic tungsten particles. The results show that when compounded into PET, the metallic tungsten particles provide satisfactory L* values.
Figure 4 shows the correlation between RHI and haze for 9921 Polymer containing metallic tungsten particles.
Figures 5 and 6 show that the addition of metallic tungsten particles to 9921 Polymer causes only insignificant shifts in color results (a* and b*).

**Example 2**

In this example, the concentrate of 9921 Polymer containing 479.9 ppm tungsten particles as described in Example 1 was used to prepare preforms and bottles. The concentrate was combined with Voridian ™ CM01 Polymer, which is a PET copolymer containing no reheat additive, to give final tungsten concentrations of 62 ppm and 100 ppm. Standard twenty-ounce bottle preforms were prepared used a BOY (22D) injection molding machine operated under a melt temperature of 280°C and cycle time of 30s.
Two sets of blow molding experiments were performed using the Sidel SB02/3 blow molding unit so as to check the reheat of each composition. The first set of experiments was conducted in order to evaluate the reheat rates, or preform surface temperature (PST), of the preforms containing tungsten particles. A series of five preforms was passed in front of the quartz infrared heaters and the PST of each composition was measured. The higher the PST value, the higher the reheat rate (or RHI) of the composition. The infrared lamp settings for the Sidel SB02/3 blow molding unit are shown in Table 4. The preform heating time in the heaters was 38 seconds, and the power output to the quartz infrared heaters was set at 64%.

**Table 4.** Sidel SBO2/3 lamp settings. Note lamps in Zones 6 through 8 were not turned on.

| **Heating zone** | **Lamps ON=1 OFF=0** | | | |
|---|---|---|---|---|
| | **Lamp power setting (%)** | **Heater 1** | **Heater 2** | **Heater 3** |
| Zone 8 | | | | |
| zone 7 | | | | |
| Zone 6 | | | | |
| Zone 5 | 90 | 1 | 0 | 1 |
| Zone 4 | 90 | 1 | 0 | 1 |
| Zone 3 | 90 | 1 | 0 | 1 |
| Zone 2 | 90 | 1 | 1 | 1 |
| Zone 1 | 90 | 1 | 1 | 1 |

In the second set of experiments, the oven power was changed so as to blow the bottles for different composition at a similar PST to ensue consistent material distribution in the final bottles with different level of tungsten particles. The PST has been controlled to be 115°C in this set of experiments.
Color measurements on the preforms were performed using a HunterLab UltraScan XE (Hunter Associates Laboratory, Inc., Reston VA), which employs diffuse/8° (illumination/view angle) sphere optical geometry. The color scale employed was the CIE LAB scale with D65 illuminant and 10° observer specified. Twenty ounce preforms, which have a sidewall thickness of 0.154 inches, overall height of 3.93 inches, and outer diameter of 0.846 inches, were measured in regular transmission mode using ASTM D1746, "Standard Test Method for Transparency of Plastic Sheeting". Preforms were held in place in the instrument using a preform holder, available from HunterLab, and triplicate measurements were averaged, whereby the sample was rotated 90° about its center axis between each measurement.
Bottle sidewall haze was measured using a BYK-Gardner (Silver Spring, MD) Haze-Gard Plus according to ASTM D 1003 on sections of the bottle sidewalls with a sidewall thickness of 0.012 inches.
The results set forth in Table 5 show that the formulations containing tungsten particles had high PST compared to CM01, indicating that the tungsten particles were very efficient at absorbing the energy from the quartz infrared heaters of the blow molding machine.

**Table 5**. Preform surface temperature (PST) at 64% oven power setting and preform color results

| Sample | Resin | Reheat additive | Measured tungsten conc. (ppm) | PST (°C) | Preform L* | Color a* | Results b* |
|---|---|---|---|---|---|---|---|
| 10 | CM01 | none | 0 | 110 | 81.23 | -0.4 | 2.79 |
| 11 | CM01 | W | 62 | 119 | 75.52 | -0.8 | 2.63 |
| 12 | CM01 | W | 100 | 123 | 71.02 | -0.89 | 2.55 |

As shown in Table 6 the formulations containing tungsten particles (entries 14 and 15) required lower oven power to reach a PST of 115 °C compared to CM01 resin (entry 13). It further illustrates that tungsten particles cause only an insignificant increase in bottle sidewall haze.

**Table 6.** Sidewall haze for bottles blown at the same preform surface temperature (PST). Note the oven power needed to reach the same PST in each sample is also given

| Sample | Resin | Reheat additive | Measured tungsten concentratio n (ppm) | Oven power (%) | PST (°C) | Bottle Sidewall Haze (%) |
|---|---|---|---|---|---|---|
| 13 | CM01 | none | 0 | 59 | 115 | 1.01 |
| 14 | CM01 | W | 62 | 61 | 115 | 1.61 |
| 15 | CM01 | W | 100 | 57 | 115 | 1.94 |

**Example 3**

Tungsten particles as described in Example 1 were added to a PET polymerization process in order to determine their effect on reheat rate and color. Polymers were prepared in the following manner.

In the first step, a PET oligomer was prepared by charging purified terephthalic acid (PTA), purified isophthalic acid (PIA), ethylene glycol (EG), and antimony trioxide (ATO) catalyst to a 2-L autoclave. The formulation was as follows: 651.0 g PTA, 13.0 g PIA, 396.0 g EG and 0.249 g ATO. The raw materials were reacted at 245 °C and 40 psig for 200 minutes. At the end of the reaction, the resulting oligomer was discharged from the reactor and allowed to solidify at room temperature and was then pulverized to a coarse powder.

In the second step, a polymer was prepared from the oligomer in the following manner. Oligomer (121g) was charged to a 500 mL polymerization flask equipped with a polymer head, an overhead stirrer, a nitrogen inlet, a dry-ice condensing trap, and a vacuum source. A metal bath was used as the heating source. Polymerization was carried out in three stages using the following conditions:

| | |
|---|---|
| Stage 1 (early prepolymer): | 272 °C, 140 torr, 70 minutes |
| Stage 2 (prepolymer): | 275 °C, 20 torr, 70 minutes |
| Stage 3 (polycondensation): | 285 °C, 2.5 torr, 100 minutes |

The tungsten powder was dispersed in EG (to a final concentration of 4.2 wt.% tungsten in EG) and then a portion of the dispersion was added to the polymerization process during the prepolymer. Phosphorus was added as a phosphoric acid solution in EG (1 wt.% P) immediately following the charge. A series of polymers was prepared with tungsten charges of from 0 ppm (control) to 287 ppm. Using this procedure, polymers were produced with an It.V. of 0.62 dUg containing 220 ppm antimony as catalyst, 30 ppm phosphorus and 0 - 130 ppm tungsten. The concentrations of antimony and phosphorus in the polymer were determined by X-ray fluorescence (XRF), and the final tungsten concentration in the polymers was determined by inductively coupled plasma optical emission spectroscopy (ICP-OES).

Molded discs were prepared, and RHI and color were prepared as described in Example 1. In the case of the lab polymers, the reheat rate was calculated by using a control polymer containing 0 ppm reheat additive. The results are given in Table 7.

Table 7. Reheat and Color results of lab polymerized samples with tungsten as reheat additive

| Sample | Reheat additive | Measured tungsten concentration (ppm) | RHI | L* | a* | b* | Haze |
|---|---|---|---|---|---|---|---|
| 16 | none | 0 | 1.00 | 81.4 | -0.9 | 4.1 | 4.1 |

(continued)

| Sample | Reheat additive | Measured tungsten concentration (ppm) | RHI | L* | a* | b* | Haze |
|---|---|---|---|---|---|---|---|
| 17 | W | 22 | 0.99 | 79.5 | -0.2 | 5.5 | 5.3 |
| 18 | W | 45 | 1.02 | 78.9 | -1.0 | 5.1 | 6.8 |
| 19 | W | 105 | 1.06 | 75.5 | -1.1 | 5.7 | 11.3 |
| 20 | none | 0 | 1.00 | 81.3 | -0.8 | 4.4 | 4.6 |
| 21 | W | 86.6 | 1.04 | 78.1 | -1.1 | 5.2 | 9.9 |
| 22 | W | 120.8 | 1.06 | 76.9 | -1.3 | 5.5 | 11.6 |

Figure 7 shows that on a concentration basis, metallic tungsten particles with a median particle size of about 0.42 μm were effective at increasing the polymer reheat. Figure 8 shows that polymers containing metallic tungsten particles have high L* values. Figure 9 shows the correlation between reheat rate and haze for polymers containing tungsten particles.

Figure 10 compares the L* and RHI results obtained when metallic tungsten particles are compounded into 9921 Polymer, as described in Example 1, and the results obtained when tungsten particles are added during the polymerization process, as described in Example 2. The plot shows that the preferred mode of addition is during the compounding process, because the impact on L* is less.

**Claims**

1. A polyester composition suitable for molding, comprising:

    a polyester polymer; and
    metallic tungsten particles in which the tungsten metal is provided in the elemental state, having a median particle size from 0.005 μm to 10 μm, dispersed in the polyester polymer in an amount from 0.5 ppm to 500 ppm, with respect to the total weight of the polyester composition.

2. The polyester composition according to claim 1, wherein the median particle size of the metallic tungsten particles is from 0.05 μm to 5 μm.

3. The polyester composition according to claim 1, wherein the median particle size of the metallic tungsten particles is from 0.05 μm to 2 μm.

4. The polyester composition of claim 1, wherein the metallic tungsten particles are present in an amount from 1 ppm to 450 ppm, with respect to the total weight of the polyester composition.

5. The polyester composition of claim 1, wherein the metallic tungsten particles are present in an amount of from 1 ppm to 400 ppm, with respect to the total weight of the polyester composition.

6. The polyester composition of claim 1, wherein the metallic tungsten particles are present in an amount of from 1 ppm to 300 ppm, with respect to the total weight of the polyester composition.

7. The polyester composition of claim 1, wherein the metallic tungsten particles are present in an amount of from 5 ppm to 250 ppm, with respect to the total weight of the polyester composition.

8. The polyester composition of claim 1, wherein the metallic tungsten particles are present in an amount of from 5 ppm to 200 ppm, with respect to the total weight of the polyester composition.

9. The polyester composition of claim 1, wherein the metallic tungsten particles are present in an amount less than 500 ppm, with respect to the total weight of the polyester composition.

10. The polyester composition of claim 1, wherein the polyester polymer comprises polyethylene terephthalate modified with one or more of isophthalic acid or 1,4-cyclohexanedimethanol.

**11.** The polyester composition of claim 1, wherein the polyester composition is in the form of a beverage bottle preform.

**12.** The polyester composition of claim 1, wherein the polyester composition is in the form of a beverage bottle.

**13.** The polyester composition of claim 1, wherein the polyester composition is in the form of a molded article.

**14.** The polyester composition of claim 1, wherein the polyester polymer comprises a continuous phase, and wherein the metallic tungsten particles are dispersed within the continuous phase.

**15.** The polyester composition of claim 1, wherein the metallic tungsten particles have a median particle size from 0.08 μm to 1.1 μm, and provide the polyester composition with a reheat rate index of at least 1.05 while maintaining the polyester composition at an L* brightness of 70 or more at a reheat rate index of 1.05.

**16.** The polyester composition of claim 1, wherein the metallic tungsten particles comprise tungsten-coated particles.

**17.** The polyester composition of claim 1, wherein the metallic tungsten particles comprise hollow spheres comprised of tungsten.

**18.** The polyester composition of claim 1, wherein the metallic tungsten particles comprise a tungsten alloy that includes tungsten and one or more of: germanium, iron, chromium, molybdenum, titanium, vanadium, carbon, or tantalum.

**19.** The polyester composition of claim 1, wherein the metallic tungsten particles comprise a tungsten alloy, wherein tungsten is present in an amount of at least 30 wt.%, with respect to the total weight of the tungsten alloy.

**20.** The polyester composition of claim 1, wherein the metallic tungsten particles comprise a tungsten alloy, wherein tungsten is present in an amount of at least 50 wt.%, with respect to the total weight of the tungsten alloy.

**21.** The polyester composition of claim 1, wherein the metallic tungsten particles comprise a tungsten alloy that includes tungsten and one or more of: germanium, iron, chromium, nickel, molybdenum, titanium, vanadium, carbon, or tantalum.

**22.** The polyester composition of claim 21, wherein the alloy further comprises, in an amount of no more than 10 wt.%, one or more of: gold, silver, copper, aluminum, manganese, or silicon.

**23.** The polyester composition of claim 1, wherein the metallic tungsten particles have a particle size distribution in which the span (S) is from 0 to 10.

**24.** The polyester composition of claim 1, wherein the metallic tungsten particles have a particle size distribution in which the span (S) is from 0.01 to 2.

**25.** The polyester composition of claim 1 having improved reheat, comprising:

a polyester polymer in which poly(ethylene terephthalate) residues comprise at least 90 wt.% of the polyester polymer; and
metallic tungsten particles in which the tungsten metal is provided in the elemental state, having a median particle size from 0.05 μm to 2 μm, randomly dispersed in the polyester polymer in an amount from 5 to 50 ppm, wherein the polyester composition has a reheat index of 1.05 or more and an L* brightness level of 70 or more at the reheat rate index of 1.05.

**26.** A process for producing a polyester composition, comprising:

an esterification step comprising transesterifying a dicarboxylic acid diester with a diol, or directly esterifying a dicarboxylic acid with a diol, to obtain one or more of a polyester monomer or a polyester oligomer;
a polycondensation step comprising reacting the one or more of a polyester monomer or a polyester oligomer in a polycondensation reaction in the presence of a polycondensation catalyst to produce a polyester polymer having an It.V. from 0.50 dUg to 1.1 dUg;
a particulation step in which the polyester polymer is solidified into particles;
an optional solid-stating step in which the solid polymer is polymerized to an It.V. from 0.70 dUg to 1.2 dUg; and

a particle addition step comprising adding and dispersing metallic tungsten particles in which the tungsten metal is provided in the elemental state to provide an amount from 5 ppm to 250 ppm by weight of the solid-stated polymer, wherein the particle addition step occurs before, during, or after any of the preceding steps.

**27.** The process according to claim 26, wherein the process further comprises a forming step, following the solid-stating step, the forming step comprising melting and extruding the resulting solid polymer to obtain a formed item having the metallic tungsten particles dispersed therein.

**28.** The process according to claim 27, wherein the particle addition step occurs during or after the solid-stating step and prior to the forming step.

**29.** The process according to claim 26, wherein the particle addition step comprises adding the metallic tungsten particles as a thermoplastic concentrate prior to or during the forming step, the thermoplastic concentrate comprising the metallic tungsten particles in an amount from 50 ppm to 5,000 ppm, with respect to the weight of the thermoplastic concentrate.

**30.** The process according to claim 26, wherein the metallic tungsten particles have a median particle size from 0.005 μm to 10 μm.

**31.** The process according to claim 26, wherein the particle addition step is carried out prior to or during the polycondensation step.

**32.** The process according to claim 26, wherein the particle addition step is carried out prior to or during the particulation step.

**33.** The process according to claim 26, wherein the particle addition step is carried out prior to or during the solid-stating step.

**34.** The process according to claim 26, wherein the particle addition step is carried out prior to or during the forming step.

**35.** The process according to claim 26, wherein the dicarboxylic acid comprises terephthalic acid.

**36.** The process according to claim 26, wherein the dicarboxylic acid diester comprises dimethyl terephthalate.

**37.** The process according to claim 26, wherein the diol comprises ethylene glycol.

**38.** The process according to claim 26, wherein the dicarboxylic acid comprises naphthalene dicarboxylic acid.

**39.** The process according to claim 26, wherein the dicarboxylic acid comprises an aromatic dicarboxylic acid.

**40.** The process according to claim 29, wherein the thermoplastic concentrate comprises:

metallic tungsten particles, in an amount ranging from 0.15 wt.% and up to 35 wt.% based on the weight of the thermoplastic concentrate; and
a thermoplastic polymer, in an amount of at least 65 wt.% based on the weight of the thermoplastic concentrate.

**41.** The process according to claim 40, wherein the thermoplastic polymer comprises one or more of: a polyester, a polyolefin, or a polycarbonate.

**42.** A process for making a polyester preform, comprising feeding a molten or solid bulk polyester and a liquid, molten or solid polyester concentrate composition to a machine for manufacturing the preform, the concentrate composition comprising metallic tungsten particles in which the tungsten metal is provided in the elemental state, having a median particle size from 0.005 μm to 10 μm, to obtain a preform having from 5 ppm to 250 ppm metallic tungsten particles, based on the weight of the polyester preform.

**43.** The process of claim 42, wherein the metallic tungsten particles are present in the concentrate composition in an amount of at least 0.15 wt.%.

**44.** The process of claim 42, wherein the concentrate polyester polymer comprises the same residues as the bulk polyester polymer.

**45.** The process of claim 42, wherein the bulk polyester and the polyester concentrate are fed to the machine in separate streams.

**46.** The process of claim 42, wherein the concentrate polyester comprises post-consumer-recycle polyester.

**47.** The process of claim 26, comprising adding a concentrate polyester composition to a melt phase process for the manufacture of virgin polyester polymers, said concentrate polyester composition comprising metallic tungsten particles in which the tungsten metal is provided in the elemental state, having a median particle size from 0.005 μm to 10 μm, to obtain the polyester composition having from 5 ppm to 250 ppm metallic tungsten particles, based on the weight of the polyester composition.

**48.** The process of claim 47, wherein the polyester concentrate is added to the melt phase when the melt phase has an It.V. which is within +/- 0.2 It.V. units of the It.V. of the polyester concentrate.

**Patentansprüche**

**1.** Polyesterzusammensetzung, die zum Formen geeignet ist, umfassend:

ein Polyesterpolymer und
metallische Wolframteilchen, wobei das Wolframmetall im elementaren Zustand bereitgestellt wird, mit einer mittleren Teilchengröße von 0,005 μm bis 10 μm, die in dem Polyesterpolymer in einer Menge von 0,5 ppm bis 500 ppm, bezogen auf das Gesamtgewicht der Polyesterzusammensetzung, dispergiert sind.

**2.** Polyesterzusammensetzung nach Anspruch 1, wobei die mittlere Teilchengröße der metallischen Wolframteilchen 0,05 μm bis 5 μm beträgt.

**3.** Polyesterzusammensetzung nach Anspruch 1, wobei die mittlere Teilchengröße der metallischen Wolframteilchen 0,05 μm bis 2 μm beträgt.

**4.** Polyesterzusammensetzung nach Anspruch 1, wobei die metallischen Wolframteilchen in einer Menge von 1 ppm bis 450 ppm, bezogen auf das Gesamtgewicht der Polyesterzusammensetzung, vorliegen.

**5.** Polyesterzusammensetzung nach Anspruch 1, wobei die metallischen Wolframteilchen in einer Menge von 1 ppm bis 400 ppm, bezogen auf das Gesamtgewicht der Polyesterzusammensetzung, vorliegen.

**6.** Polyesterzusammensetzung nach Anspruch 1, wobei die metallischen Wolframteilchen in einer Menge von 1 ppm bis 300 ppm, bezogen auf das Gesamtgewicht der Polyesterzusammensetzung, vorliegen.

**7.** Polyesterzusammensetzung nach Anspruch 1, wobei die metallischen Wolframteilchen in einer Menge von 5 ppm bis 250 ppm, bezogen auf das Gesamtgewicht der Polyesterzusammensetzung, vorliegen.

**8.** Polyesterzusammensetzung nach Anspruch 1, wobei die metallischen Wolframteilchen in einer Menge von 5 ppm bis 200 ppm, bezogen auf das Gesamtgewicht der Polyesterzusammensetzung, vorliegen.

**9.** Polyesterzusammensetzung nach Anspruch 1, wobei die metallischen Wolframteilchen in einer Menge von weniger als 500 ppm, bezogen auf das Gesamtgewicht der Polyesterzusammensetzung, vorliegen.

**10.** Polyesterzusammensetzung nach Anspruch 1, wobei das Polyesterpolymer Polyethylenterephthalat, modifiziert mit einem oder mehreren von Isophthalsäure oder 1,4-Cyclohexandimethanol, umfasst.

**11.** Polyesterzusammensetzung nach Anspruch 1, wobei die Polyesterzusammensetzung in Form eines Getränkeflaschen-Rohlings vorliegt.

**12.** Polyesterzusammensetzung nach Anspruch 1, wobei die Polyesterzusammensetzung in Form einer Getränkeflasche vorliegt.

**13.** Polyesterzusammensetzung nach Anspruch 1, wobei die Polyesterzusammensetzung in Form eines Formköpers vorliegt.

**14.** Polyesterzusammensetzung nach Anspruch 1, wobei das Polyesterpolymer eine kontinuierliche Phase umfasst und wobei die metallischen Wolframteilchen in der kontinuierlichen Phase dispergiert sind.

**15.** Polyesterzusammensetzung nach Anspruch 1, wobei die metallischen Wolframteilchen eine mittlere Teilchengröße von 0,08 μm bis 1,1 μm haben und die Polyesterzusammensetzung mit einem Index der Wiedererwärmungsrate von mindestens 1,05 versehen, während die Polyesterzusammensetzung bei einer Helligkeit L* von 70 oder mehr bei einem Index der Wiedererwärmungsrate von 1,05 gehalten wird.

**16.** Polyesterzusammensetzung nach Anspruch 1, wobei die metallischen Wolframteilchen mit Wolfram beschichtete Teilchen umfassen.

**17.** Polyesterzusammensetzung nach Anspruch 1, wobei die metallischen Wolframteilchen Hohlkugeln, bestehend aus Wolfram, umfassen.

**18.** Polyesterzusammensetzung nach Anspruch 1, wobei die metallischen Wolframteilchen eine Wolframlegierung umfassen, die Wolfram und eines oder mehrere von: Germanium, Eisen, Chrom, Molybdän, Titan, Vanadium, Kohlenstoff oder Tantal enthält.

**19.** Polyesterzusammensetzung nach Anspruch 1, wobei die metallischen Wolframteilchen eine Wolframlegierung umfassen, wobei Wolfram in einer Menge von mindestens 30 Gew.-%, bezogen auf das Gesamtgewicht der Wolframlegierung, vorliegt.

**20.** Polyesterzusammensetzung nach Anspruch 1, wobei die metallischen Wolframteilchen eine Wolframlegierung umfassen, wobei Wolfram in einer Menge von mindestens 50 Gew.-%, bezogen auf das Gesamtgewicht der Wolframlegierung, vorliegt.

**21.** Polyesterzusammensetzung nach Anspruch 1, wobei die metallischen Wolframteilchen eine Wolframlegierung umfassen, die Wolfram und eines oder mehrere von: Germanium, Eisen, Chrom, Nickel, Molybdän, Titan, Vanadium, Kohlenstoff oder Tantal enthält.

**22.** Polyesterzusammensetzung nach Anspruch 21, wobei die Legierung ferner, in einer Menge von nicht mehr als 10 Gew.-%, eines oder mehrere von: Gold, Silber, Kupfer, Aluminium, Mangan oder Silicium umfasst.

**23.** Polyesterzusammensetzung nach Anspruch 1, wobei die metallischen Wolframteilchen eine Teilchengrößenverteilung aufweisen, bei der die Spanne (S) 0 bis 10 beträgt.

**24.** Polyesterzusammensetzung nach Anspruch 1, wobei die metallischen Wolframteilchen eine Teilchengrößenverteilung aufweisen, bei der die Spanne (S) 0,01 bis 2 beträgt.

**25.** Polyesterzusammensetzung nach Anspruch 1 mit verbesserter Wiedererwärmung, umfassend:

ein Polyesterpolymer, wobei Poly(ethylenterephthalat)-Reste mindestens 90 Gew.-% des Polyesterpolymers umfassen; und
metallische Wolframteilchen, wobei das Wolframmetall im elementaren Zustand bereitgestellt wird, mit einer mittleren Teilchengröße von 0,05 μm bis 2 μm, die zufällig in dem Polyesterpolymer in einer Menge von 5 bis 50 ppm dispergiert sind, wobei die Polyesterzusammensetzung einen Wiedererwärmungsindex von 1,05 oder mehr und ein Helligkeitslevel L* von 70 oder mehr bei dem Index der Wiedererwärmungsrate von 1,05 hat.

**26.** Verfahren zur Herstellung einer Polyesterzusammensetzung, umfassend:

einen Veresterungsschritt, umfassend das Umestern eines Dicarbonsäurediesters mit einem Diol oder das direkte Verestern einer Dicarbonsäure mit einem Diol unter Erhalt eines oder mehrerer eines Polyestermonomers oder Polyesteroligomers,

einen Polykondensationsschritt, umfassend das Umsetzen des einen oder der mehreren eines Polyestermonomers oder Polyesteroligomers in einer Polykondensationsreaktion in Gegenwart eines Polykondensationskatalysators unter Erzeugung eines Polyesterpolymers mit einer GV von 0,50 dl/g bis 1,1 dl/g;
einen Granulierungsschritt, bei dem das Polyesterpolymer zu Teilchen verfestigt wird;
einen optionalen Festphasen-Polykondensationsschritt, bei dem das feste Polymer zu einer GV von 0,70 dl/g bis 1,2 dl/g polymerisiert wird; und
einen Teilchenzugabeschritt, umfassend die Zugabe und Dispergierung von metallischen Wolframteilchen, wobei das Wolframmetall im elementaren Zustand bereitgestellt wird, unter Bereitstellung einer Menge von 5 ppm bis 250 ppm, bezogen auf das Gewicht des Polymers nach der Festphasen-Polykondensation, wobei der Teilchenzugabeschritt vor, während oder nach einem der vorhergehenden Schritte erfolgt.

**27.** Verfahren nach Anspruch 26, wobei das Verfahren ferner einen Formgebungsschritt, der dem Festphasen-Polykondensationsschritt folgt, umfasst, wobei der Formgebungsschritt das Schmelzen und Extrudieren des resultierenden festen Polymers unter Erhalt eines Formteils mit darin dispergierten metallischen Wolframteilchen umfasst.

**28.** Verfahren nach Anspruch 27, wobei der Teilchenzugabeschritt während oder nach dem Festphasen-Polykondensationsschritt und vor dem Formgebungsschritt erfolgt.

**29.** Verfahren nach Anspruch 26, wobei der Teilchenzugabeschritt die Zugabe der metallischen Wolframteilchen als ein thermoplastisches Konzentrat vor oder während des Formgebungsschrittes umfasst, wobei das thermoplastische Konzentrat die metallischen Wolframteilchen in einer Menge von 50 ppm bis 5.000 ppm, bezogen auf das Gewicht des thermoplastischen Konzentrats, umfasst.

**30.** Verfahren nach Anspruch 26, wobei die metallischen Wolframteilchen eine mittlere Teilchengröße von 0,005 μm bis 10 μm haben.

**31.** Verfahren nach Anspruch 26, wobei der Teilchenzugabeschritt vor oder während des Polykondensationsschrittes durchgeführt wird.

**32.** Verfahren nach Anspruch 26, wobei der Teilchenzugabeschritt vor oder während des Granulierungsschrittes durchgeführt wird.

**33.** Verfahren nach Anspruch 26, wobei der Teilchenzugabeschritt vor oder während des Festphasen-Polykondensationsschrittes durchgeführt wird.

**34.** Verfahren nach Anspruch 26, wobei der Teilchenzugabeschritt vor oder während des Formgebungsschrittes durchgeführt wird.

**35.** Verfahren nach Anspruch 26, wobei die Dicarbonsäure Terephthalsäure umfasst.

**36.** Verfahren nach Anspruch 26, wobei der Dicarbonsäurediester Dimethylterephthalat umfasst.

**37.** Verfahren nach Anspruch 26, wobei das Diol Ethylenglycol umfasst.

**38.** Verfahren nach Anspruch 26, wobei die Dicarbonsäure Naphthalindicarbonsäure umfasst.

**39.** Verfahren nach Anspruch 26, wobei die Dicarbonsäure eine aromatische Dicarbonsäure umfasst.

**40.** Verfahren nach Anspruch 29, wobei das thermoplastische Konzentrat:

metallische Wolframteilchen in einer Menge im Bereich von 0,15 Gew.-% und bis zu 35 Gew.-%, basierend auf dem Gewicht des thermoplastisches Konzentrats; und
ein thermoplastisches Polymer in einer Menge von mindestens 65 Gew.-%, basierend auf dem Gewicht des thermoplastischen Konzentrats,
umfasst.

**41.** Verfahren nach Anspruch 40, wobei das thermoplastische Polymer eines oder mehrere von: einem Polyester, einem Polyolefin oder einem Polycarbonat umfasst.

**42.** Verfahren zur Herstellung eines Polyesterrohlings, umfassend das Einspeisen eines geschmolzenen oder festen Massepolyesters und einer flüssigen, geschmolzenen oder festen Polyesterkonzentratzusammensetzung in eine Maschine zur Herstellung des Rohlings, wobei die Konzentratzusammensetzung metallische Wolframteilchen, wobei das Wolframmetall im elementaren Zustand bereitgestellt wird, mit einer mittleren Teilchengröße von 0,005 μm bis 10 μm umfasst, unter Erhalt eines Rohlings mit 5 ppm bis 250 ppm metallischen Wolframteilchen, bezogen auf das Gewicht des Polyesterrohlings.

**43.** Verfahren nach Anspruch 42, wobei die metallischen Wolframteilchen in der Konzentratzusammensetzung in einer Menge von mindestens 0,15 Gew.-% vorliegen.

**44.** Verfahren nach Anspruch 42, wobei das Konzentrat-Polyesterpolymer dieselben Reste umfasst, wie das Massepolyesterpolymer.

**45.** Verfahren nach Anspruch 42, wobei der Massepolyester und das Polyesterkonzentrat in die Maschine in separaten Strömen eingespeist werden.

**46.** Verfahren nach Anspruch 42, wobei der Konzentrat-Polyester nach Verbrauch recycelten Polyester umfasst.

**47.** Verfahren nach Anspruch 26, umfassend das Zugeben einer Konzentrat-Polyesterzusammensetzung zu einem Schmelzphasenverfahren zur Herstellung von rohen Polyesterpolymeren, wobei die Konzentrat-Polyesterzusammensetzung metallische Wolframteilchen, wobei das Wolframmetall im elementaren Zustand bereitgestellt wird, mit einer mittleren Teilchengröße von 0,005 μm bis 10 μm umfasst, unter Erhalt der Polyesterzusammensetzung mit 5 ppm bis 250 ppm metallischen Wolframteilchen, bezogen auf das Gewicht der Polyesterzusammensetzung.

**48.** Verfahren nach Anspruch 47, wobei das Polyesterkonzentrat zu der Schmelzphase zugegeben wird, wenn die Schmelzphase eine GV hat, die innerhalb von +/- 0,2 GV-Einheiten der GV des Polyesterkonzentrats liegt.

**Revendications**

**1.** Composition de polyester adaptée pour le moulage, comprenant :

un polymère de polyester ; et
des particules de tungstène métalliques dans lesquelles le métal tungstène est fourni à l'état élémentaire, ayant une taille de particule moyenne de 0,005 μm à 10 μm, dispersées dans le polymère de polyester dans une quantité de 0,5 ppm à 500 ppm, relativement au poids total de la composition de polyester.

**2.** Composition de polyester selon la revendication 1, dans laquelle la taille moyenne de particule des particules de tungstène métalliques est de 0,05 μm à 5 μm.

**3.** Composition de polyester selon la revendication 1, dans laquelle la taille moyenne de particule des particules de tungstène métalliques est de 0,05 μm à 2 μm.

**4.** Composition de polyester selon la revendication 1, dans laquelle les particules de tungstène métalliques sont présentes dans une quantité de 1 ppm à 450 ppm, relativement au poids total de la composition de polyester.

**5.** Composition de polyester selon la revendication 1, dans laquelle les particules de tungstène métalliques sont présentes dans une quantité de 1 ppm à 400 ppm, relativement au poids total de la composition de polyester.

**6.** Composition de polyester selon la revendication 1, dans laquelle les particules de tungstène métalliques sont présentes dans une quantité de 1 ppm à 300 ppm, relativement au poids total de la composition de polyester.

**7.** Composition de polyester selon la revendication 1, dans laquelle les particules de tungstène métalliques sont présentes dans une quantité de 5 ppm à 250 ppm, relativement au poids total de la composition de polyester.

**8.** Composition de polyester selon la revendication 1, dans laquelle les particules de tungstène métalliques sont présentes dans une quantité de 5 ppm à 200 ppm, relativement au poids total de la composition de polyester.

**9.** Composition de polyester selon la revendication 1, dans laquelle les particules de tungstène métalliques sont présentes dans une quantité inférieure à 500 ppm, relativement au poids total de la composition de polyester.

**10.** Composition de polyester selon la revendication 1, dans laquelle le polymère de polyester comprend du polyéthylène téréphtalate modifié par un ou plusieurs éléments parmi l'acide isophtalique ou l'1,4-cyclohexanediméthanol.

**11.** Composition de polyester selon la revendication 1, dans laquelle la composition de polyester est sous la forme d'une préforme de bouteille de boisson.

**12.** Composition de polyester selon la revendication 1, dans laquelle la composition de polyester est sous la forme d'une bouteille de boisson.

**13.** Composition de polyester selon la revendication 1, dans laquelle la composition de polyester est sous la forme d'un article moulé.

**14.** Composition de polyester selon la revendication 1, dans laquelle le polymère de polyester comprend une phase continue, et dans laquelle les particules de tungstène métalliques sont dispersées dans la phase continue.

**15.** Composition de polyester selon la revendication 1, dans laquelle les particules de tungstène métalliques ont une taille moyenne de particules de 0,08 μm à 1,1 μm, et donnent à la composition de polyester un indice de taux de réchauffage d'au moins 1,05, tout en maintenant la composition de polyester à une brillance L* de 70 ou plus à un indice de taux de réchauffage de 1,05.

**16.** Composition de polyester selon la revendication 1, dans laquelle les particules de tungstène métalliques comprennent des particules revêtues de tungstène.

**17.** Composition de polyester selon la revendication 1, dans laquelle les particules de tungstène métalliques comprennent des billes creuses comprenant du tungstène.

**18.** Composition de polyester selon la revendication 1, dans laquelle les particules de tungstène métallique comprennent un alliage de tungstène qui contient du tungstène et un ou plusieurs éléments parmi : le germanium, le fer, le chrome, le molybdène, le titane, le vanadium, le carbone ou le tantale.

**19.** Composition de polyester selon la revendication 1, dans laquelle les particules de tungstène métalliques comprennent un alliage de tungstène, dans lequel du tungstène est présent dans une quantité d'au moins 30% en poids, relativement au poids total de l'alliage de tungstène.

**20.** Composition de polyester selon la revendication 1, dans laquelle les particules de tungstène métalliques comprennent un alliage de tungstène, dans lequel du tungstène est présent dans une quantité d'au moins 50% en poids, relativement au poids total de l'alliage de tungstène.

**21.** Composition de polyester selon la revendication 1, dans laquelle les particules de tungstène métalliques comprennent un alliage de tungstène qui contient du tungstène et un ou plusieurs éléments parmi : le germanium, le fer, le chrome, le nickel, le molybdène, le titane, le vanadium, le carbone ou le tantale.

**22.** Composition de polyester selon la revendication 21, dans laquelle l'alliage comprend en outre, dans une quantité d'au plus 10% en poids, un ou plusieurs éléments parmi : l'or, l'argent, le cuivre, l'aluminium, le manganèse ou le silicium.

**23.** Composition de polyester selon la revendication 1, dans laquelle les particules de tungstène métalliques ont une répartition de taille de particule dans laquelle la plage (S) est de 0 à 10.

**24.** Composition de polyester selon la revendication 1, dans laquelle les particules de tungstène métalliques ont une répartition en taille de particule dans laquelle la plage (S) est de 0,01 à 2.

**25.** Composition de polyester selon la revendication 1, ayant un réchauffage amélioré, comprenant :

un polymère de polyester dans lequel les résidus de poly(éthylène téréphtalate) comprennent au moins 90%

en poids du polymère de polyester ; et
des particules de tungstène métalliques dans lesquelles le métal est fourni à l'état élémentaire, ayant une taille moyenne de particule de 0,05 µm à 2 µm, dispersées de manière aléatoire dans le polymère de polyester, dans une quantité de 5 à 50 ppm, dans laquelle la composition de polyester a un indice de réchauffage de 1,05 ou plus et un niveau de brillance L* de 70 ou plus à l'indice de taux de réchauffage de 1,05.

**26.** Procédé de production d'une composition de polyester, comprenant :

une étape d'estérification comprenant la transestérification d'un diester d'acide dicarboxylique avec un diol, ou l'estérification directe d'un acide dicarboxylique avec un diol, afin d'obtenir un ou plusieurs éléments parmi un monomère de polyester ou un oligomère de polyester ;
une étape de polycondensation comprenant la réaction du ou de plusieurs monomères de polyester ou d'un oligomère de polyester dans une réaction de polycondensation, en présence d'un catalyseur de polycondensation, afin de produire un polymère de polyester ayant un It.V. de 0,50 dL/g à 1,1 dL/g ;
une étape de particulation dans laquelle le polymère de polyester est solidifié en particules ;
une étape de passage à l'état solide en option, dans laquelle le polymère solide est polymérisé à un It.V. de 0,70 dL/g à 1,2 dL/g ; et
une étape d'addition de particules comprenant l'addition et la dispersion de particules de tungstène métalliques, dans lesquelles le métal tungstène est fourni à l'état élémentaire, afin d'obtenir une quantité de 5 ppm à 250 ppm en poids du polymère à l'état solide, dans laquelle l'étape d'addition de particules survient avant, pendant ou après l'une quelconque des étapes précédentes.

**27.** Procédé selon la revendication 26, dans lequel le procédé comprend en outre une étape de moulage, suivant l'étape de passage à l'état solide, l'étape de moulage comprenant la fusion et l'extrusion du polymère solide obtenu, afin d'obtenir un article moulé dans lequel les particules de tungstène métalliques sont dispersées.

**28.** Procédé selon la revendication 27, dans lequel l'étape d'addition de particules survient pendant ou après l'étape de passage à l'état solide et avant l'étape de moulage.

**29.** Procédé selon la revendication 26, dans lequel l'étape d'addition de particules comprend l'addition de particules de tungstène métalliques sous la forme d'un concentré thermoplastique avant ou pendant l'étape de moulage, le concentré thermoplastique comprenant les particules de tungstène métalliques dans une quantité de 50 ppm à 5000 ppm, relativement au poids dudit concentré thermoplastique.

**30.** Procédé selon la revendication 26, dans lequel les particules de tungstène métalliques ont une taille moyenne de particules de 0,005 µm à 10 µm.

**31.** Procédé selon la revendication 26, dans lequel l'étape d'addition de particules est réalisée avant ou pendant l'étape de polycondensation.

**32.** Procédé selon la revendication 26, dans lequel l'étape d'addition de particule est réalisée avant ou pendant l'étape de particulation.

**33.** Procédé selon la revendication 26, dans lequel l'étape d'addition de particules est réalisée avant ou pendant l'étape de passage à l'état solide.

**34.** Procédé selon la revendication 26, dans lequel l'étape d'addition de particules est réalisée avant ou pendant l'étape de moulage.

**35.** Procédé selon la revendication 26, dans lequel l'acide dicarboxylique comprend de l'acide téréphtalique.

**36.** Procédé selon la revendication 26, dans lequel le diester d'acide dicarboxylique comprend du diméthyl-téréphtalate.

**37.** Procédé selon la revendication 26, dans lequel le diol comprend de l'éthylène glycol.

**38.** Procédé selon la revendication 26, dans lequel l'acide dicarboxylique comprend de l'acide naphtalène-dicarboxylique.

**39.** Procédé selon la revendication 26, dans lequel l'acide dicarboxylique comprend un acide dicarboxylique aromatique.

**40.** Procédé selon la revendication 29, dans lequel le concentré thermoplastique comprend :

des particules de tungstène métalliques, dans une quantité comprise entre 0,15% en poids et jusqu'à 35% en poids, sur la base du poids du concentré thermoplastique ; et
un polymère thermoplastique, dans une quantité d'au moins 65% en poids sur la base du poids du concentré thermoplastique.

**41.** Procédé selon la revendication 40, dans lequel le polymère thermoplastique comprend un ou plusieurs éléments parmi : un polyester, une polyoléfine, ou un polycarbonate.

**42.** Procédé de réalisation d'une préforme de polyester, comprenant l'alimentation d'un polyester en masse fondu ou solide, et d'une composition de concentré de polyester liquide, fondue ou solide à une machine pour fabriquer la préforme, la composition concentrée comprenant des particules de tungstène métalliques, dans lesquelles le métal tungstène est fourni à l'état élémentaire, ayant une taille moyenne de particules de 0,005 μm à 10 μm, afin d'obtenir une préforme ayant de 5 ppm à 250 ppm de particules de tungstène métalliques, sur la base du poids de la préforme de polyester.

**43.** Procédé selon la revendication 42, dans lequel les particules de tungstène métalliques sont présentes dans la composition concentrée dans une quantité d'au moins 0,15% en poids.

**44.** Procédé selon la revendication 42, dans lequel le polymère de polyester concentré comprend les mêmes résidus que le polymère de polyester en vrac.

**45.** Procédé selon la revendication 42, dans lequel le polyester en vrac et le concentré de polyester sont amenés à la machine dans des courants séparés.

**46.** Procédé selon la revendication 42, dans lequel le polyester concentré comprend un polyester de recyclage après-consommation.

**47.** Procédé selon la revendication 26, comprenant l'addition d'une composition de polyester concentrée à un procédé de phase de fusion pour la fabrication de polymères de polyester vierges, ladite composition de polyester concentrée comprenant des particules de tungstène métalliques, dans lesquelles le métal tungstène est fourni à l'état élémentaire, ayant une taille moyenne de particules de 0,005 μm à 10 μm, pour obtenir la composition de polyester ayant de 5 ppm à 250 ppm de particules de tungstène métalliques, sur la base du poids de la composition de polyester.

**48.** Procédé selon la revendication 47, dans lequel le concentré de polyester est ajouté à la phase fondue, quand la phase fondue a un It.V qui est de +/- 0,2 unités It.V de l'It.V du concentré de polyester.

Figure 1

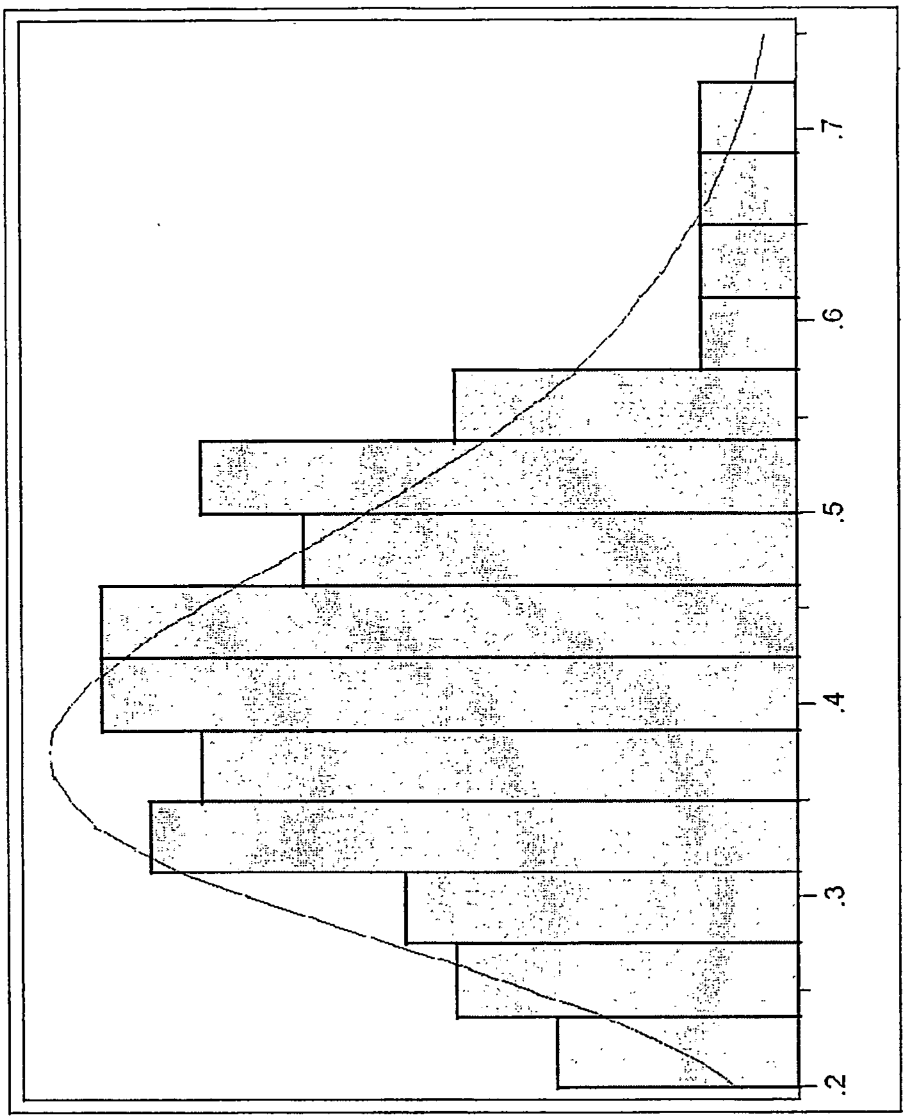

Figure 2

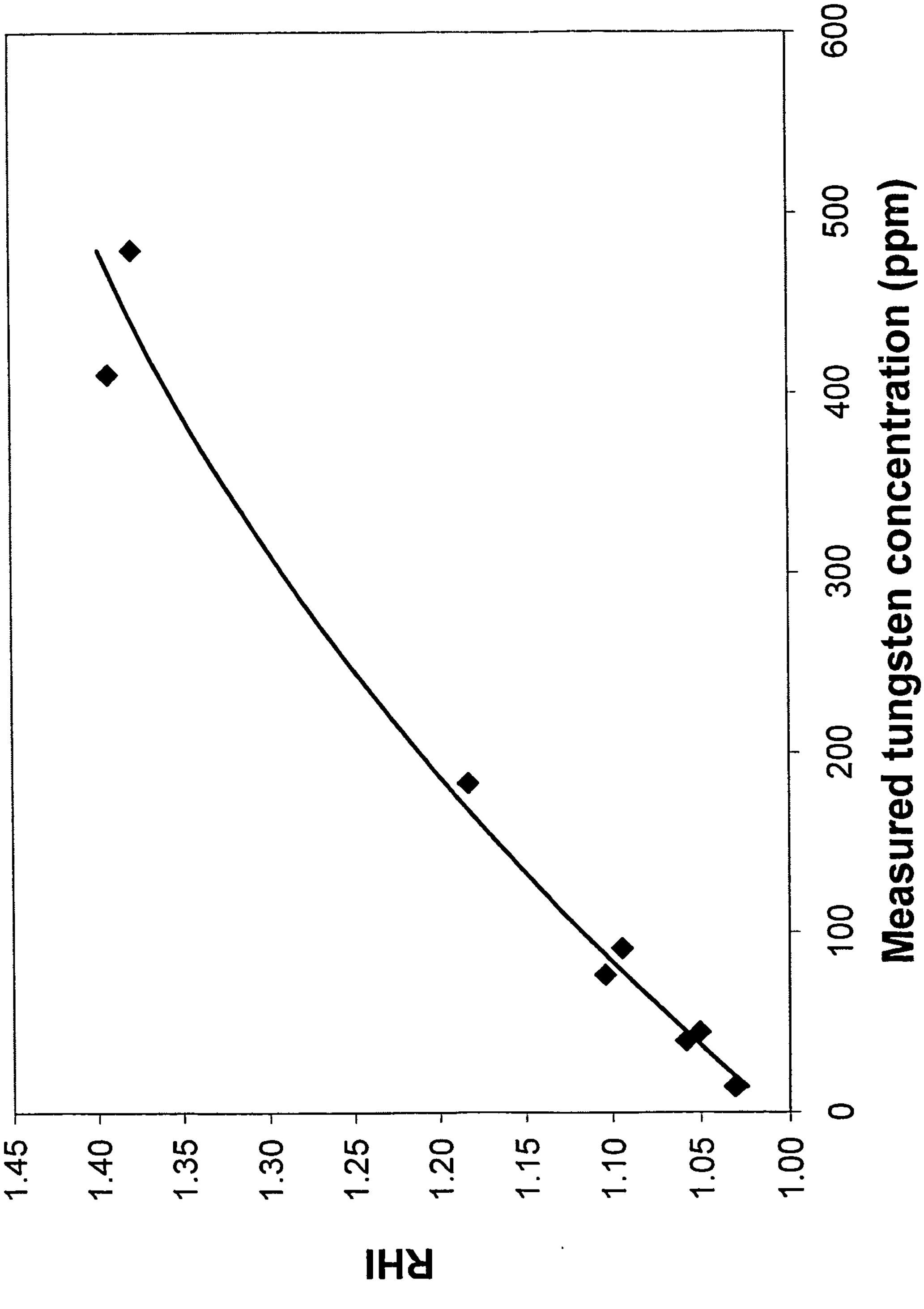
RHI
1.45
1.40
1.35
1.30
1.25
1.20
1.15
1.10
1.05
1.00
0
100
200
300
400
500
600
Measured tungsten concentration (ppm)

Figure 3

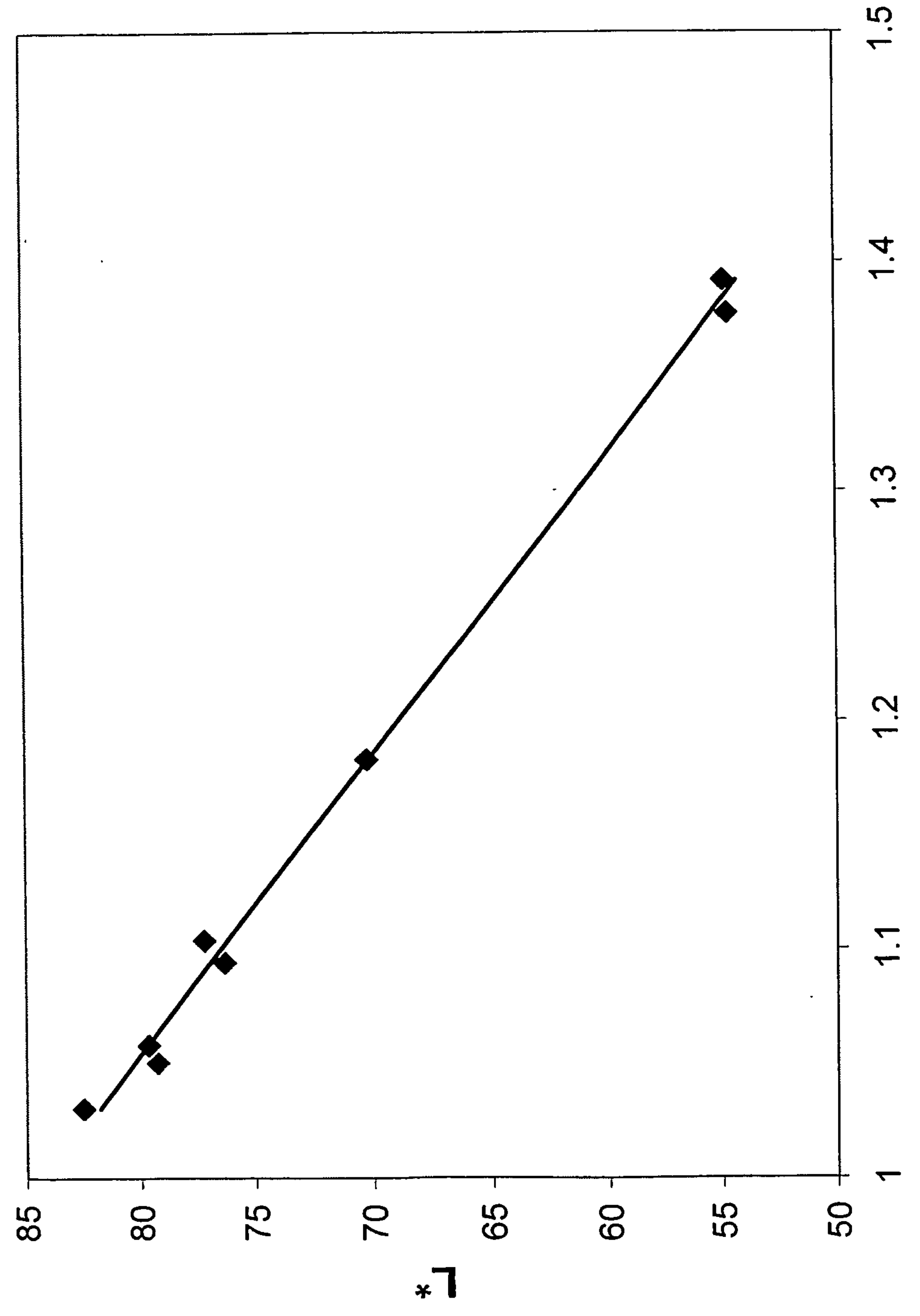

Figure 4

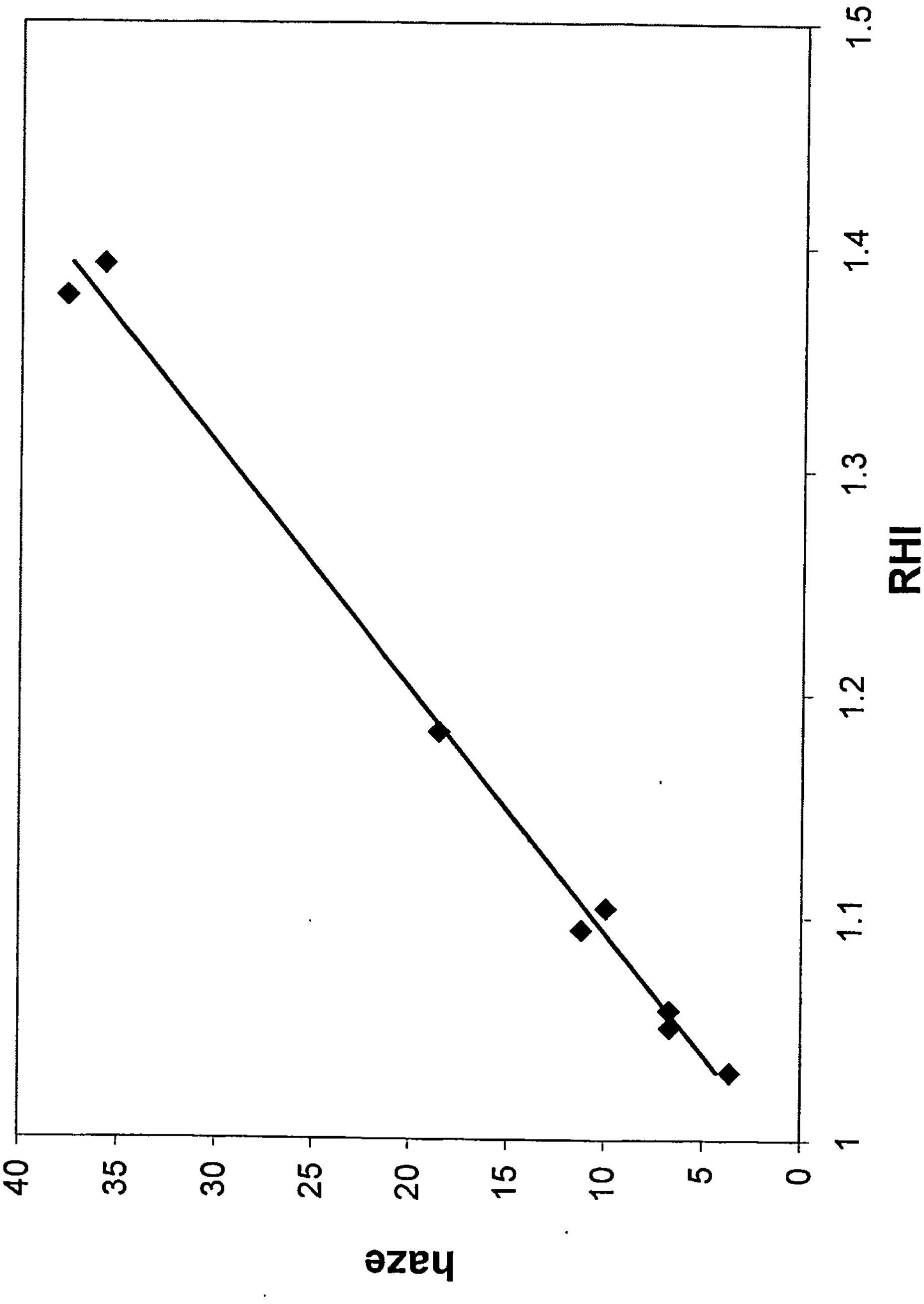

Figure 5

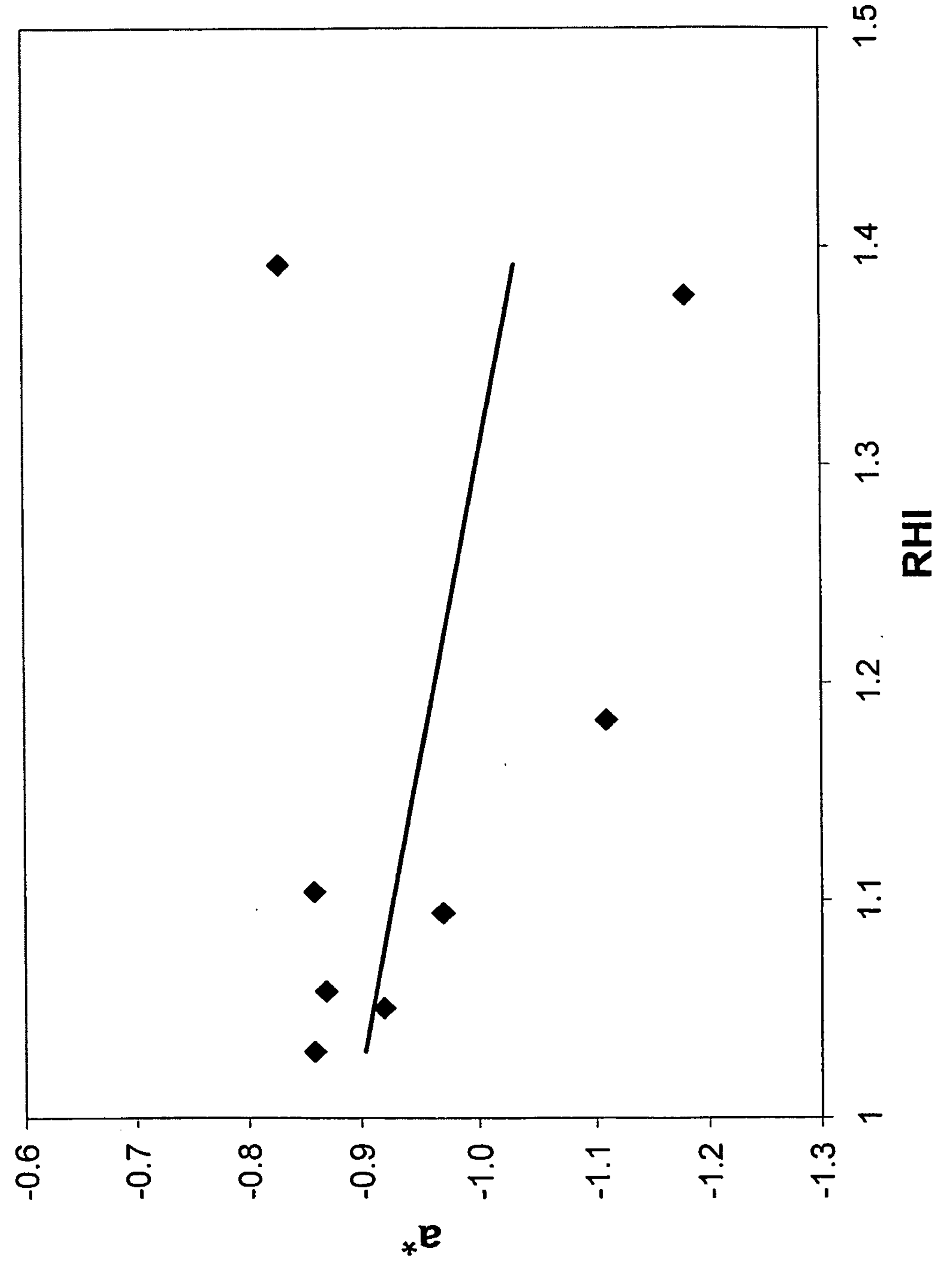

Figure 6

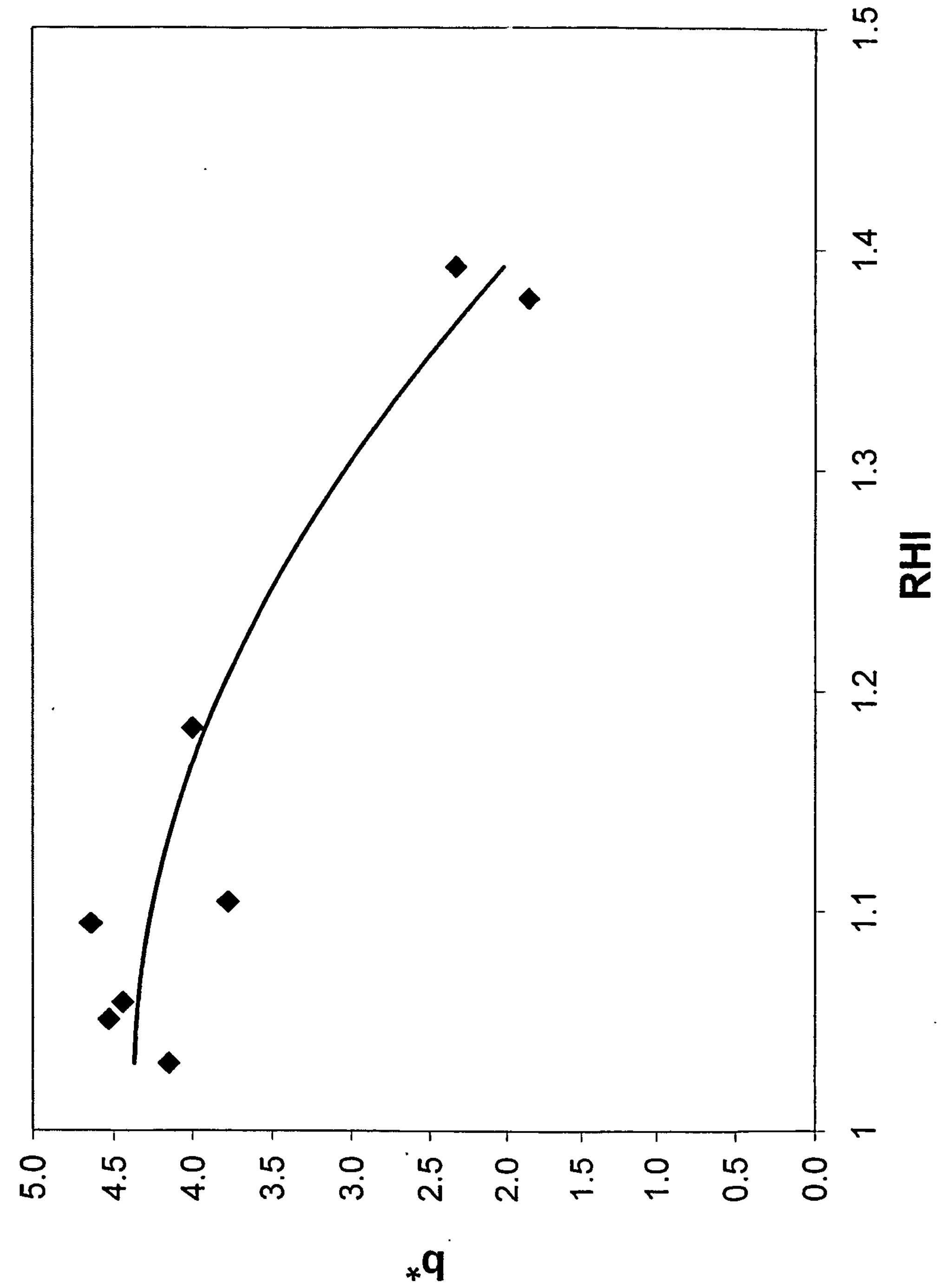

Figure 7

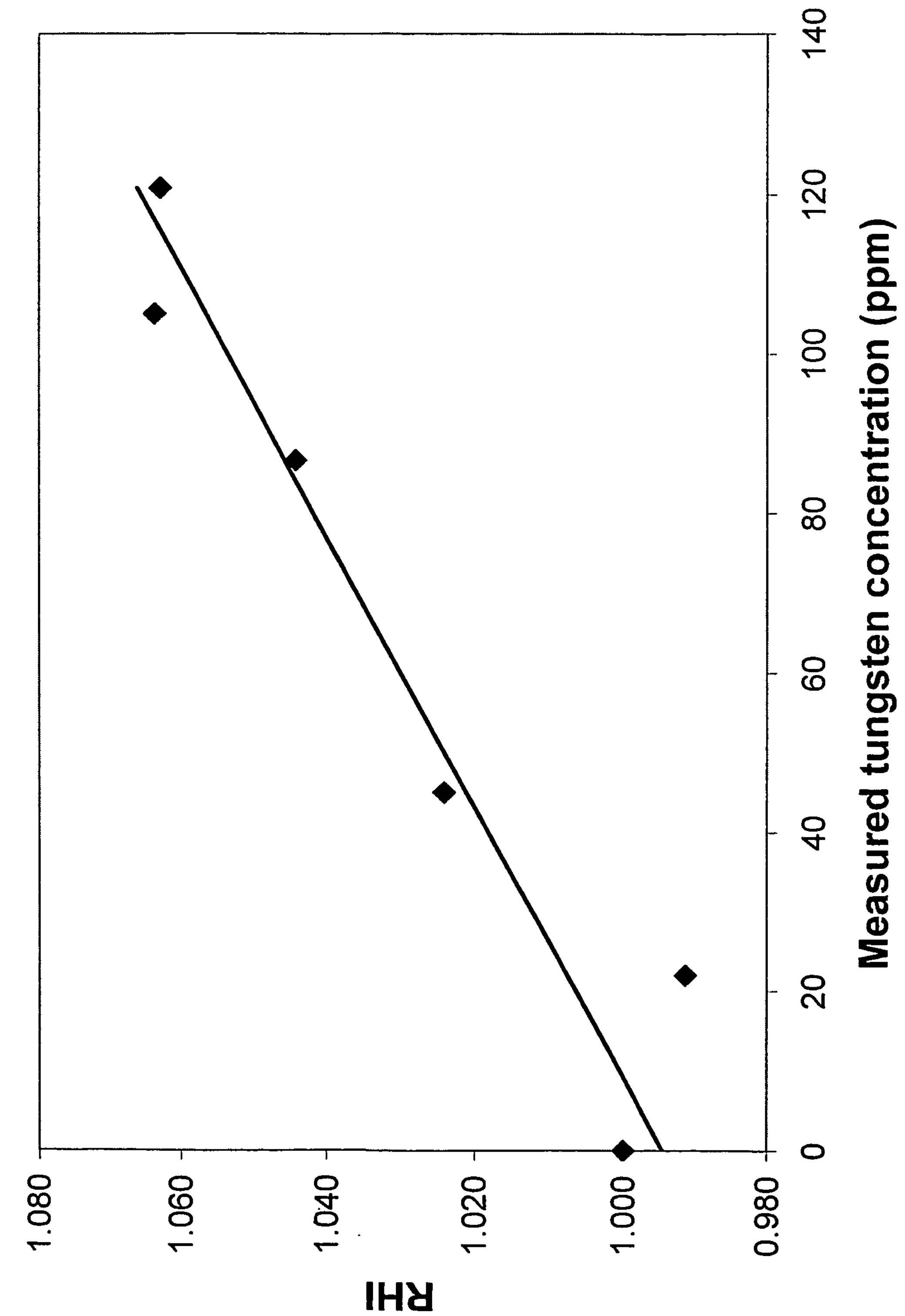
RHI
1.080
1.060
1.040
1.020
1.000
0.980
0
20
40
60
80
100
120
140
Measured tungsten concentration (ppm)

Figure 8

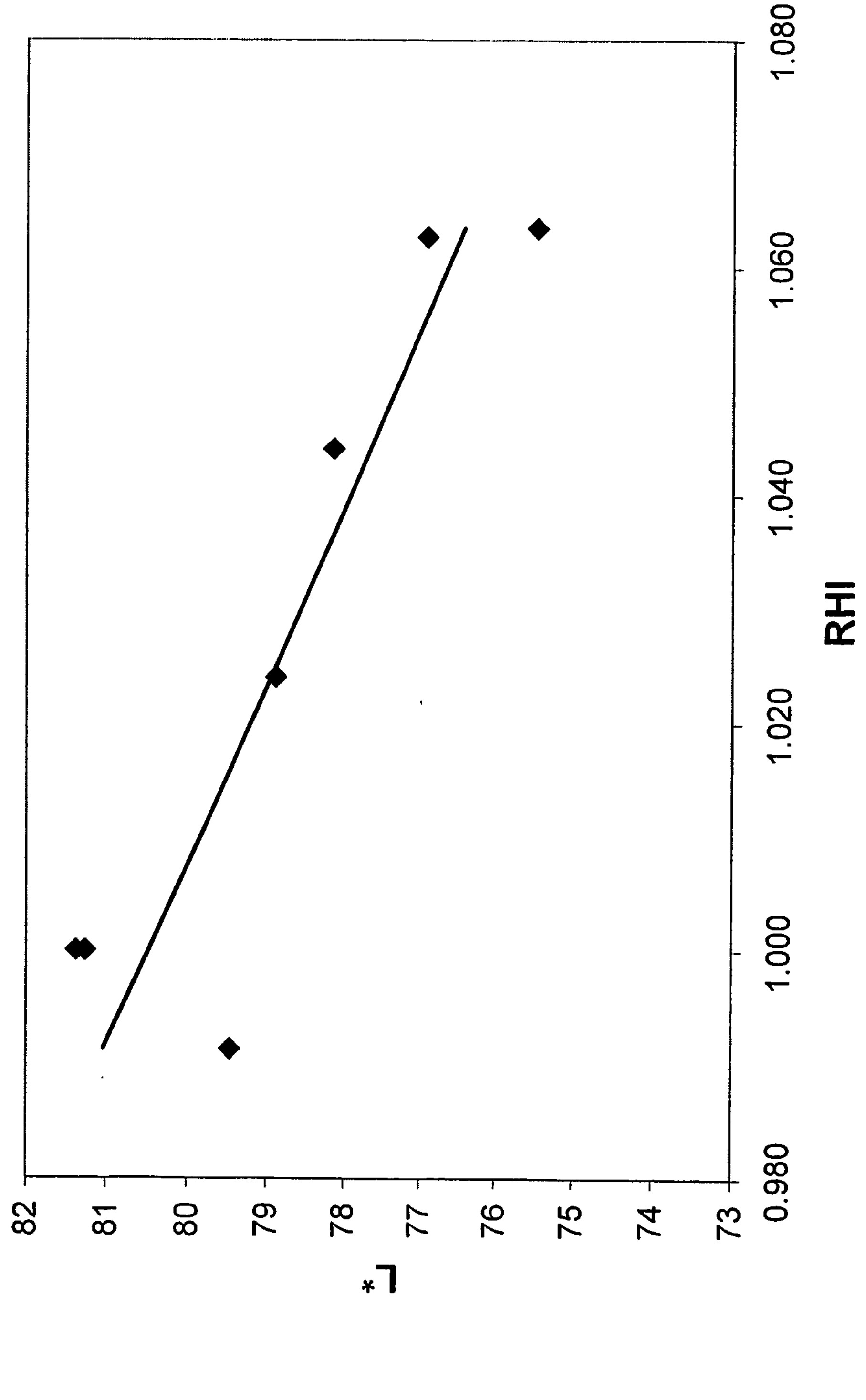

Figure 9

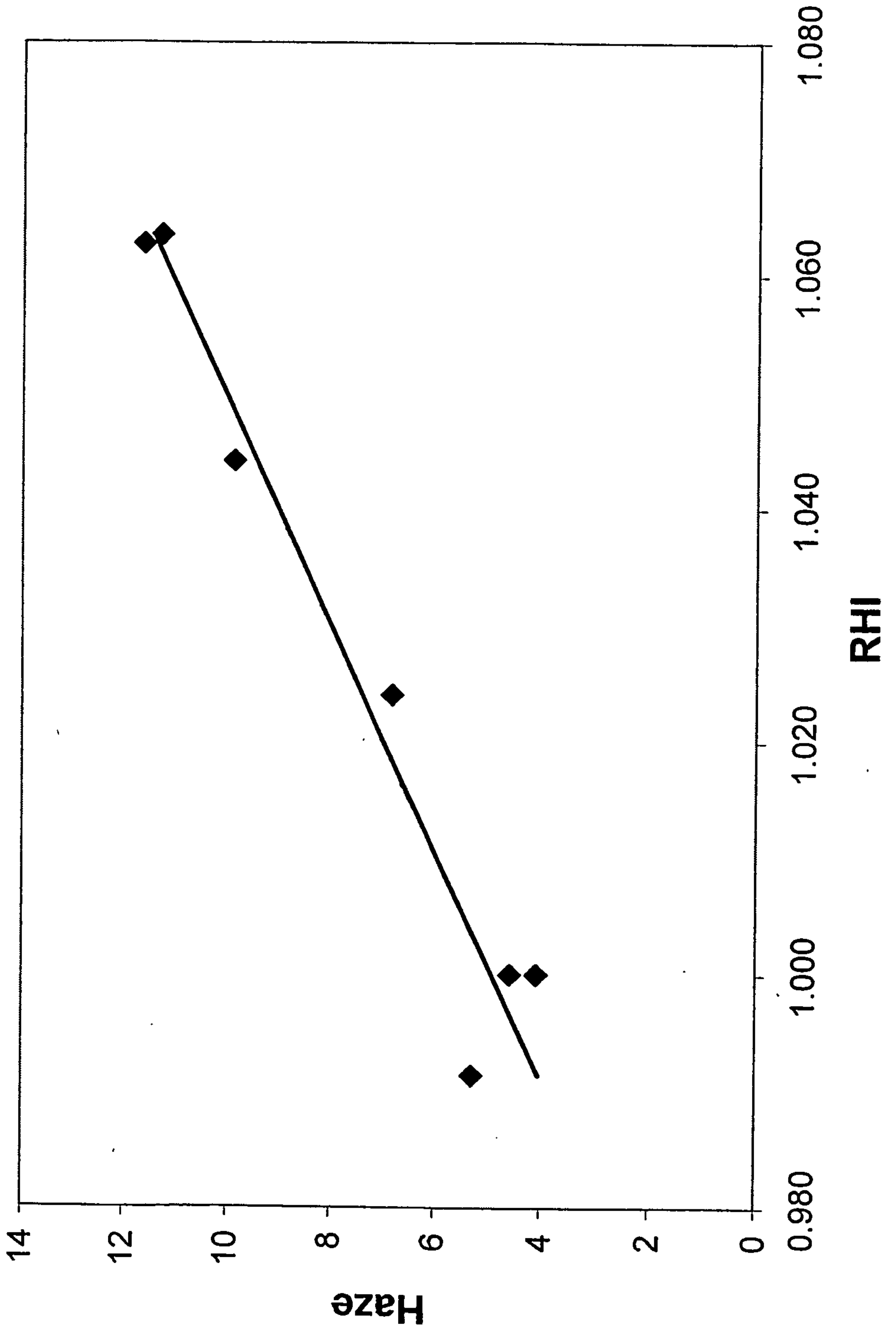

Figure 10

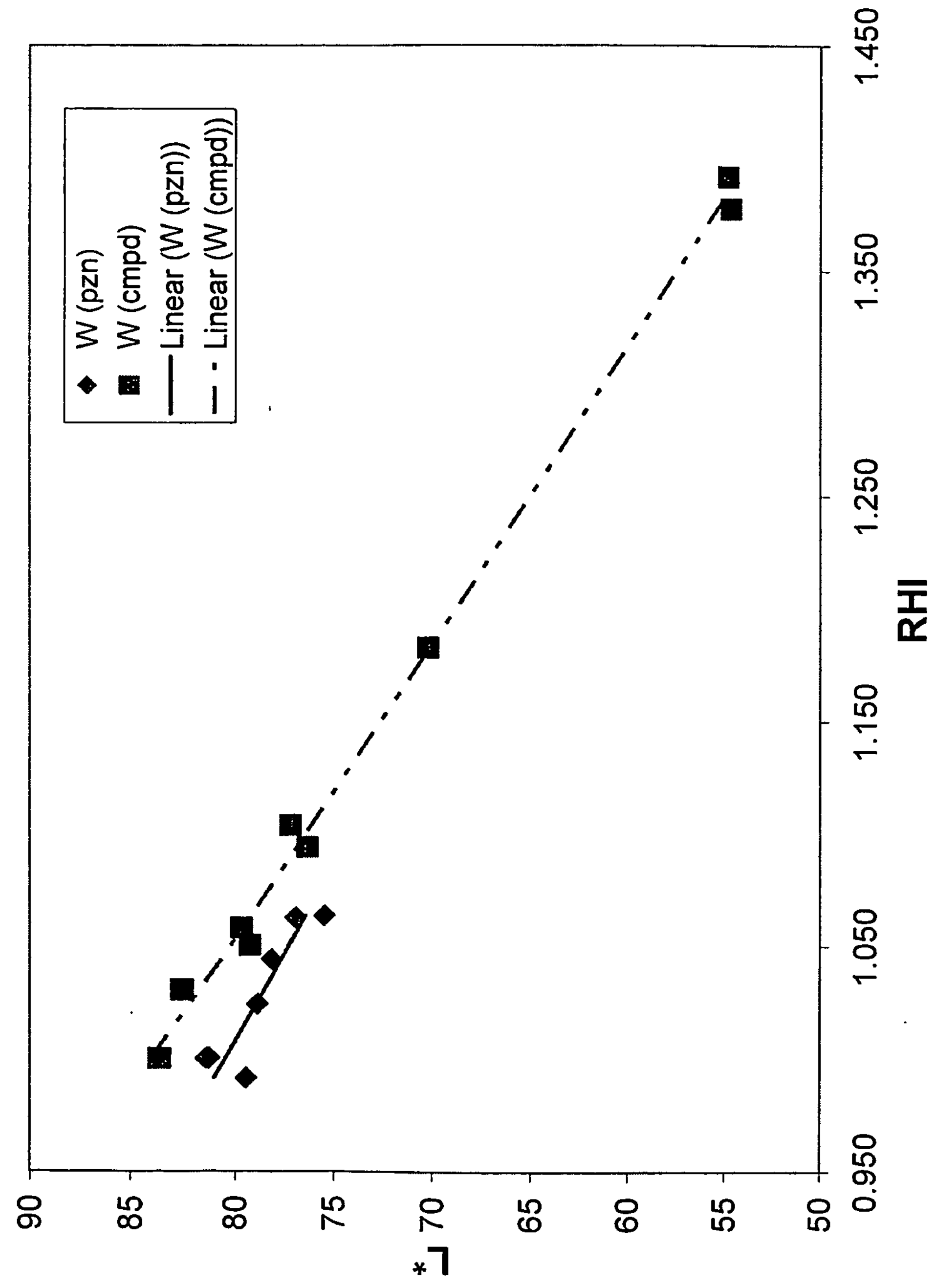
W (pzn)
W (cmpd)
Linear (W (pzn))
Linear (W (cmpd))
L*
RHI
90
85
80
75
70
65
60
55
50
0.950
1.050
1.150
1.250
1.350
1.450

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3733309 A
- JP 2003306601 A
- JP 2001226474 A
- US 6300399 B
- US 6197851 B
- US 4617374 A

### Non-patent literature cited in the description

- **KIRK-OTHMER.** Encyclopedia of Chemical Technology. 1995, vol. 24, 588-600
- **KIRK-OTHMER.** Encyclopedia of Chemical-Technology. 1995, vol. 24, 572-588
- **KIRK-OTHMER.** Encyclopedia of Chemical Technology. 1995, vol. 16, 353-392
- **KIRK-OTHMER.** Encyclopedia of Chemical Technology. 1995, vol. 24, 588-600
- **KIRK-OTHMER.** Encyclopedia of Chemical Technology. vol. 22, 256-278
- **FRED W. BILLMEYER, JR.** Principles of Color Technology. John Wiley & Sons, 1981, 25-66
- Pigment Handbook. John Wiley & Sons, 1973, vol. 1, 323-349